(19) **Europäisches Patentamt**
**European Patent Office**
**Office européen des brevets**

(11) **EP 3 244 671 A1**

(12) **EUROPEAN PATENT APPLICATION**
published in accordance with Art. 153(4) EPC

(43) Date of publication:
**15.11.2017 Bulletin 2017/46**

(21) Application number: **16735212.9**

(22) Date of filing: **08.01.2016**

(51) Int Cl.:
***H04W 68/02*** *(2009.01)*     ***H04W 88/08*** *(2009.01)*

(86) International application number:
**PCT/KR2016/000206**

(87) International publication number:
**WO 2016/111591 (14.07.2016 Gazette 2016/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.01.2015 US 201562101339 P**
          **09.01.2015 US 201562101381 P**

(71) Applicant: **LG Electronics Inc.**
**Yeongdeungpo-gu**
**Seoul 07336 (KR)**

(72) Inventors:
- **RYU, Jinsook**
  **Seoul 06772 (KR)**
- **YI, Yunjung**
  **Seoul 06772 (KR)**
- **LEE, Jaewook**
  **Seoul 06772 (KR)**
- **BYUN, Daewook**
  **Seoul 06772 (KR)**

(74) Representative: **Cabinet Plasseraud**
**66, rue de la Chaussée d'Antin**
**75440 Paris Cedex 09 (FR)**

(54) **METHOD FOR TRANSMITTING PAGING IN WIRELESS COMMUNICATION SYSTEM AND DEVICE THEREFOR**

(57)     A paging transmission method and an apparatus for the same in a wireless communication system are provided. Specifically, a method for transmitting paging by a eNodeB (eNB) in a wireless communication system is provided. The method may include receiving a paging message including paging count and a coverage enhancement (CE) level value from a mobility management entity (MME) and in case of receiving the paging message from the MME, transmitting paging information to a user equipment(UE) through a paging control channel (PCCH), wherein the CE level value is a CE level received from a eNB to which the UE is lastly connected.

[FIG. 1]

EP 3 244 671 A1

**Description**

[Technical Field]

The present invention relates to wireless communication systems, and more particularly, to a method for performing or supporting transmission of paging message to a user equipment and an apparatus for supporting the same.

[Background Art]

Mobile communication systems have been developed to provide voice services, while guaranteeing user activity. Service coverage of mobile communication systems, however, has extended even to data services, as well as voice services, and currently, an explosive increase in traffic has resulted in shortage of resource and user demand for a high speed services, requiring advanced mobile communication systems.

The requirements of the next-generation mobile communication system may include supporting huge data traffic, a remarkable increase in the transfer rate of each user, the accommodation of a significantly increased number of connection devices, very low end-to-end latency, and high energy efficiency. To this end, various techniques, such as small cell enhancement, dual connectivity, massive Multiple Input Multiple Output (MIMO), in-band full duplex, non-orthogonal multiple access (NOMA), supporting super-wide band, and device networking, have been researched.

[Disclosure]

[Technical Problem]

An object of the present invention is to propose a method for transmitting paging to a user equipment in coverage enhancement.

Another object of the present invention is to propose a method for determining a coverage enhancement level which is applied when transmitting (retransmitting) paging to a user equipment in coverage enhancement.

A yet another object of the present invention is to propose S1 release procedure in order to determine a coverage enhancement level which is applied when transmitting (retransmitting) paging to a user equipment in coverage enhancement.

The technical objects to attain in the present invention are not limited to the above-described technical objects and other technical objects which are not described herein will become apparent to those skilled in the art from the following description.

[Technical Solution]

According to an aspect of the present invention, a method for transmitting paging by a eNodeB (eNB) in a wireless communication system is provided. The method may include receiving a paging message including paging count and a coverage enhancement (CE) level value from a mobility management entity (MME)and in case of receiving the paging message from the MME, transmitting paging information to a user equipment (UE) through a paging control channel (PCCH), wherein the CE level value is a CE level received from a eNB to which the UE is lastly connected.

According to another aspect of the present invention, a eNodeB (eNB) for transmitting paging in a wireless communication system is provided. The apparatus may include a communication module for transmitting and receiving signals and a processor controlling the communication module, wherein the processor is configured to perform receiving a paging message including paging count and a coverage enhancement (CE) level value from a mobility management entity (MME) and in case of receiving the paging message from the MME, transmitting paging information to a user equipment (UE) through a paging control channel (PCCH), wherein the CE level value is a CE level received from a eNB to which the UE is lastly connected.

Preferably, the paging message may include an E-UTRAN cell global identifier (ECGI) of a cell to which the CE level value is applied.

Preferably, the CE level may be transmittedthrough an S1 UE context release complete message to the MME during an S1 release procedure.

Preferably, the CE level value included in the paging message may be determined to be one of a lowest value, an average value, a medium value and a highest value among the total CE level values by the MME.

Preferably, the CE level value included in the paging message may be identical regardless of the paging count.

Preferably, the CE level of the UE may be determined by ramping-up the CE level value which is included in the paging message according to the paging count by the eNB.

Preferably, if the paging count is 1, the CE level value included in the paging message may be a CE level value which is transmitted through the S1 UE context release complete message, and if the paging count is 2 or more, the CE level value included in the paging message may be a CE level value which is ramped-up according to the paging count.

Preferably, if the paging count is 1, the CE level value may be one of a lowest value, an average value, a medium value and a highest value among the total CE level values which is determined by the MME, and if the paging count is 2 or more, the CE level value included in the paging message may be a CE level value which is ramped-up according to the paging count.

Preferably, if the CE level value which is higher than a CE level that is available to be serviced by the eNB is received from the MME, a maximum CE level that is available to be serviced by the eNB is applied to transmitting the paging information.

Preferably, if the paging count is 1, the paging message may include the paging count and the CE level value, and if the paging count is 2 or more, the paging message may include the paging count and does not include the CE level.

[Advantageous Effects]

According to embodiments of the present invention, paging reception efficiency of a user equipment in coverage enhancement can be increased.

In addition, according to embodiments of the present invention, unnecessary consumption of radio resources can be prevented by transmitting (retransmitting) using appropriate coverage enhancement level paging to a user equipment in coverage enhancement.

In addition, according to embodiments of the present invention, inefficient power consumption owing to a user equipment's decoding by transmitting (retransmitting) using appropriate coverage enhancement level paging to a user equipment within coverage enhancement.

The effects of the present invention are not limited to the above-described effects and other effects which are not described herein will become apparent to those skilled in the art from the following description.

[Description of Drawings]

The accompanying drawings, which are included to provide a further understanding of the present invention and constitute a part of specifications of the present invention, illustrate embodiments of the present invention and together with the corresponding descriptions serve to explain the principles of the present invention.

FIG. 1 is a diagram schematically exemplifying an evolved packet system (EPS) to which the present invention can be applied.

FIG. 2 illustrates an example of evolved universal terrestrial radio access network structure to which the present invention can be applied.

FIG. 3 exemplifies a structure of E-UTRAN and EPC in a wireless communication system to which the present invention can be applied.

FIG. 4 illustrates a structure of a radio interface protocol between a UE and E-UTRAN in a wireless communication system to which the present invention can be applied.

FIG. 5 illustrates a structure of an S1 interface protocol to which the present invention can be applied.

FIG. 6 is a diagram schematically exemplifying a structure of physical channel in a wireless communication system to which the present invention can be applied.

FIG. 7 is a diagram exemplifying states of EMM and ECM in a wireless communication system to which the present invention can be applied.

FIG. 8 exemplifies a bearer structure in a wireless communication system to which the present invention can be applied.

FIG. 9 is a diagram exemplifying a transmission path of a control plane and a user plane in an EMM registered state in a wireless communication system to which the present invention can be applied.

FIG. 10 is a diagram exemplifying an ECM connection establishment procedure in a wireless communication system to which the present invention can be applied.

FIG. 11 is a diagram for describing the contention-based random access procedure in the wireless communication system to which the present invention can be applied.

FIG. 12 is a diagram exemplifying a UE trigger service request procedure in the wireless communication system to which the present invention can be applied.

FIG. 13 is a diagram exemplifying a network trigger service request procedure in a wireless communication system to which the present invention can be applied.

FIG. 14 is a diagram exemplifying a paging procedure in a wireless communication system to which the present invention can be applied.

FIG. 15 is a diagram exemplifying an S1 release procedure in a wireless communication system to which the present invention can be applied.

FIG. 16 is a diagram exemplifying coverage enhancement operations in a wireless communication system to which the present invention can be applied.

FIG. 17 is a drawing exemplifying an S1 release procedure for determining a coverage enhancement level in a paging procedure according to an embodiment of the present invention.

FIG. 18 is a diagram exemplifying a paging transmission method according to an embodiment of the present invention.

FIG. 19 is a diagram exemplifying a paging transmission method according to an embodiment of the present invention.

FIG. 20 is a diagram exemplifying a paging transmission method according to an embodiment of the present invention.

FIG. 21 is a diagram exemplifying a paging transmission method according to an embodiment of the present invention.

FIG. 22 is a diagram exemplifying a paging transmission method according to an embodiment of the present invention.

FIG. 23 is a diagram exemplifying a paging transmission method according to an embodiment of the present invention.

FIG. 24 and FIG. 25 exemplify block diagrams of a communication apparatus according to an embodiment of the present invention.

[Best Mode for Invention]

In what follows, preferred embodiments according to the present invention will be described in detail with reference to appended drawings. The detailed descriptions provided below together with appended drawings are intended only to explain illustrative embodiments of the present invention, which should not be regarded as the sole embodiments of the present invention. The detailed descriptions below include specific information to provide complete understanding of the present invention. However, those skilled in the art will be able to comprehend that the present invention can be embodied without the specific information.

For some cases, to avoid obscuring the technical principles of the present invention, structures and devices well-known to the public can be omitted or can be illustrated in the form of block diagrams utilizing fundamental functions of the structures and the devices.

A base station in this document is regarded as a terminal node of a network, which performs communication directly with a UE. In this document, particular operations regarded to be performed by the base station may be performed by a upper node of the base station depending on situations. In other words, it is apparent that in a network consisting of a plurality of network nodes including a base station, various operations performed for communication with a UE can be performed by the base station or by network nodes other than the base station. The term Base Station (BS) can be replaced with a fixed station, Node B, evolved-NodeB (eNB), Base Transceiver System (BTS), or Access Point (AP). Also, a terminal can be fixed or mobile; and the term can be replaced with User Equipment (UE), Mobile Station (MS), User Terminal (UT), Mobile Subscriber Station (MSS), Subscriber Station (SS), Advanced Mobile Station (AMS), Wireless Terminal (WT), Machine-Type Communication (MTC) device, Machine-to-Machine (M2M) device, or Device-to-Device (D2D) device.

In what follows, downlink (DL) refers to communication from a base station to a terminal, while uplink (UL) refers to communication from a terminal to a base station. In downlink transmission, a transmitter can be part of the base station, and a receiver can be part of the terminal. Similarly, in uplink transmission, a transmitter can be part of the terminal, and a receiver can be part of the base station.

Specific terms used in the following descriptions are introduced to help understanding the present invention, and the specific terms can be used in different ways as long as it does not leave the technical scope of the present invention.

The technology described below can be used for various types of wireless access systems based on Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), or Non-Orthogonal Multiple Access (NOMA). CDMA can be implemented by such radio technology as Universal Terrestrial Radio Access (UTRA) or CDMA2000. TDMA can be implemented by such radio technology as Global System for Mobile communications (GSM), General Packet Radio Service (GPRS), or Enhanced Data rates for GSM Evolution (EDGE). OFDMA can be implemented by such radio technology as the IEEE 802.11 (Wi-Fi), the IEEE 802.16 (WiMAX), the IEEE 802-20, or Evolved UTRA (E-UTRA). UTRA is part of the Universal Mobile Telecommunications System (UMTS). The 3rd Generation Partnership Project (3GPP) Long Term Evolution (LTE) is part of the Evolved UMTS (E-UMTS) which uses the E-UTRA, employing OFDMA for downlink and SC-FDMA for uplink transmission. The LTE-A (Advanced) is an evolved version of the 3GPP LTE system.

Embodiments of the present invention can be supported by standard documents disclosed in at least one of wireless access systems including the IEEE 802, 3GPP, and 3GPP2 specifications. In other words, among the embodiments of the present invention, those steps or parts omitted for the purpose of clearly describing technical principles of the present invention can be supported by the documents above. Also, all of the terms disclosed in this document can be explained with reference to the standard documents.

To clarify the descriptions, this document is based on the 3GPP LTE/LTE-A, but the technical features of the present invention are not limited to the current descriptions.

Terms used in this document are defined as follows.

- Universal Mobile Telecommunication System (UMTS): the 3rd generation mobile communication technology based on GSM, developed by the 3GPP
- Evolved Packet System (EPS): a network system comprising an Evolved Packet Core (EPC), a packet switched core network based on the Internet Protocol (IP) and an access network such as the LTE and UTRAN. The EPS is a network evolved from the UMTS.
- NodeB: the base station of the UMTS network. NodeB is installed outside and provides coverage of a macro cell.
- eNodeB: the base station of the EPS network. eNodeB is installed outside and provides coverage of a macro cell.
- User Equipment (UE): A UE can be called a terminal, Mobile Equipment (ME), or Mobile Station (MS). A UE can be a portable device such as a notebook computer, mobile phone, Personal Digital Assistant (PDA), smart phone, or a multimedia device; or a fixed device such as a Personal Computer (PC) or vehicle-mounted device. The term UE may refer to an MTC terminal in the description related to MTC.
- IP Multimedia Subsystem (IMS): a sub-system providing multimedia services based on the IP
- International Mobile Subscriber Identity (IMSI): a globally unique subscriber identifier assigned in a mobile communication network
- Machine Type Communication (MTC): communication performed by machines without human intervention. It may be called Machine-to-Machine (M2M) communication.
- MTC terminal (MTC UE or MTC device): a terminal (for example, a vending machine, meter, and so on) equipped with a communication function operating through a mobile communication network and performing an MTC function
- MTC server: a server on a network managing MTC terminals. It can be installed inside or outside a mobile communication network. It can provide an interface through which an MTC user can access the server. Also, an MTC server can provide MTC-related services to other servers (in the form of Services Capability Server (SCS)) or the MTC server itself can be an MTC Application Server.
- (MTC) application: services (to which MTC is applied) (for example, remote metering, traffic movement tracking, weather observation sensors, and so on)
- (MTC) Application Server: a server on a network in which (MTC) applications are performed
- MTC feature: a function of a network to support MTC applications. For example, MTC monitoring is a feature intended to prepare for loss of a device in an MTC application such as remote metering, and low mobility is a feature intended for an MTC application with respect to an MTC terminal such as a vending machine.
- MTC subscriber: an entity having a connection relationship with a network operator and providing services to one or more MTC terminals.
- MTC group: an MTC group shares at least one or more MTC features and denotes a group of MTC terminals belonging to MTC subscribers.
- Services Capability Server (SCS): an entity being connected to the 3GPP network and used for communicating with an MTC InterWorking Function (MTC-IWF) on a Home PLMN (HPLMN) and an MTC terminal.
- External identifier: a globally unique identifier used by an external entity (for example, an SCS or an Application Server) of the 3GPP network to indicate (or identify) an MTC terminal (or a subscriber to which the MTC terminal belongs). An external identifier comprises a domain identifier and a local identifier as described below.
- Domain identifier: an identifier used for identifying a domain in the control region of a mobile communication network service provider. A service provider can use a separate domain identifier for each service to provide an access to a different service.
- Local identifier: an identifier used for deriving or obtaining an International Mobile Subscriber Identity (IMSI). A local identifier should be unique within an application domain and is managed by a mobile communication network service provider.
- Radio Access Network (RAN): a unit including a Node B, a Radio Network Controller (RNC) controlling the Node B, and an eNodeB in the 3GPP network. The RAN is defined at the terminal level and provides a connection to a core network.
- Home Location Register (HLR)/Home Subscriber Server (HSS): a database provisioning subscriber information within the 3GPP network. An HSS can perform functions of configuration storage, identity management, user state storage, and so on.
- RAN Application Part (RANAP): an interface between the RAN and a node in charge of controlling a core network (in other words, a Mobility Management Entity (MME)/Serving GPRS (General Packet Radio Service) Supporting Node (SGSN)/Mobile Switching Center (MSC)).
- Public Land Mobile Network (PLMN): a network formed to provide mobile communication services to individuals. The PLMN can be formed separately for each operator.

- Non-Access Stratum (NAS): a functional layer for exchanging signals and traffic messages between a terminal and a core network at the UMTS and EPS protocol stack. The NAS is used primarily for supporting mobility of a terminal and a session management procedure for establishing and maintaining an IP connection between the terminal and a PDN GW.

In what follows, the present invention will be described based on the terms defined above.

Overview of system to which the present invention may be applied

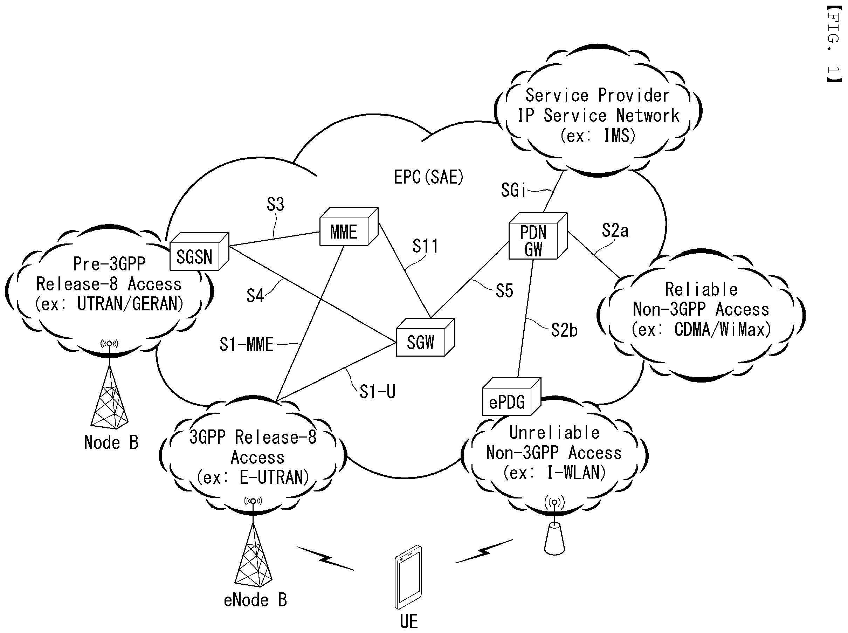

FIG. 1 illustrates an Evolved Packet System (EPS) to which the present invention can be applied.

The network structure of FIG. 1 is a simplified diagram restructured from an Evolved Packet System (EPS) including Evolved Packet Core (EPC).

The EPC is a main component of the System Architecture Evolution (SAE) intended for improving performance of the 3GPP technologies. SAE is a research project for determining a network structure supporting mobility between multiple heterogeneous networks. For example, SAE is intended to provide an optimized packet-based system which supports various IP-based wireless access technologies, provides much more improved data transmission capability, and so on.

More specifically, the EPC is the core network of an IP-based mobile communication system for the 3GPP LTE system and capable of supporting packet-based real-time and non-real time services. In the existing mobile communication systems (namely, in the 2nd or 3rd mobile communication system), functions of the core network have been implemented through two separate sub-domains: a Circuit-Switched (CS) sub-domain for voice and a Packet-Switched (PS) sub-domain for data. However, in the 3GPP LTE system, an evolution from the 3rd mobile communication system, the CS and PS sub-domains have been unified into a single IP domain. In other words, in the 3GPP LTE system, connection between UEs having IP capabilities can be established through an IP-based base station (for example, eNodeB), EPC, and application domain (for example, IMS). In other words, the EPC provides the architecture essential for implementing end-to-end IP services.

The EPC comprises various components, where FIG. 1 illustrates part of the EPC components, including a Serving Gateway (SGW or S-GW), Packet Data Network Gateway (PDN GW or PGW or P-GW), Mobility Management Entity (MME), Serving GPRS Supporting Node (SGSN), and enhanced Packet Data Gateway (ePDG).

The SGW operates as a boundary point between the Radio Access Network (RAN) and the core network and maintains a data path between the eNodeB and the PDN GW. Also, in case the UE moves across serving areas by the eNodeB, the SGW acts as an anchor point for local mobility. In other words, packets can be routed through the SGW to ensure mobility within the E-UTRAN (Evolved-UMTS (Universal Mobile Telecommunications System) Terrestrial Radio Access Network defined for the subsequent versions of the 3GPP release 8). Also, the SGW may act as an anchor point for mobility between the E-UTRAN and other 3GPP networks (the RAN defined before the 3GPP release 8, for example, UTRAN or GERAN (GSM (Global System for Mobile Communication)/EDGE (Enhanced Data rates for Global Evolution) Radio Access Network).

The PDN GW corresponds to a termination point of a data interface to a packet data network. The PDN GW can support policy enforcement features, packet filtering, charging support, and so on. Also, the PDN GW can act as an anchor point for mobility management between the 3GPP network and non-3GPP networks (for example, an unreliable network such as the Interworking Wireless Local Area Network (I-WLAN) or reliable networks such as the Code Division Multiple Access (CDMA) network and Wimax).

In the example of a network structure as shown in FIG. 1, the SGW and the PDN GW are treated as separate gateways; however, the two gateways can be implemented according to single gateway configuration option.

The MME performs signaling for the UE's access to the network, supporting allocation, tracking, paging, roaming, handover of network resources, and so on; and control functions. The MME controls control plane functions related to subscribers and session management. The MME manages a plurality of eNodeBs and performs signaling of the conventional gateway's selection for handover to other 2G/3G networks. Also, the MME performs such functions as security procedures, terminal-to-network session handling, idle terminal location management, and so on.

The SGSN deals with all kinds of packet data including the packet data for mobility management and authentication of the user with respect to other 3GPP networks (for example, the GPRS network).

The ePDG acts as a security node with respect to an unreliable, non-3GPP network (for example, I-WLAN, WiFi hotspot, and so on).

As described with respect to FIG. 1, a UE with the IP capability can access the IP service network (for example, the IMS) that a service provider (namely, an operator) provides, via various components within the EPC based not only on the 3GPP access but also on the non-3GPP access.

Also, FIG. 1 illustrates various reference points (for example, S1-U, S1-MME, and so on). The 3GPP system defines a reference point as a conceptual link which connects two functions defined in disparate functional entities of the E-UTAN and the EPC. Table 1 below summarizes reference points shown in FIG. 1. In addition to the examples of FIG. 1, various other reference points can be defined according to network structures.

[Table 1]

| Reference point | Description |
|---|---|
| S1-MME | Reference point for the control plane protocol between E-UTRAN and MME |
| S1-U | Reference point between E-UTRAN and Serving GW for the per bearer user plane tunneling and inter eNodeB path switching during handover |
| S3 | It enables user and bearer information exchange |
| | for inter 3GPP access network mobility in idle and/or active state. This reference point can be used intra-PLMN or inter-PLMN (e.g. in the case of Inter-PLMN HO). |
| S4 | It provides related control and mobility support between GPRS core and the 3GPP anchor function of Serving GW. In addition, if direct tunnel is not established, it provides the user plane tunneling. |
| S5 | It provides user plane tunneling and tunnel management between Serving GW and PDN GW. It is used for Serving GW relocation due to UE mobility if the Serving GW needs to connect to a non-collocated PDN GW for the required PDN connectivity. |
| S11 | Reference point for the control plane protocol between MME and SGW |
| SGi | It is the reference point between the PDN GW and the packet data network. Packet data network may be an operator external public or private packet data network or an intra-operator packet data network (e.g., for provision of IMS services). This reference point corresponds to Gi for 3GPP accesses. |

Among the reference points shown in FIG. 1, S2a and S2b corresponds to non-3GPP interfaces. S2a is a reference point which provides reliable, non-3GPP access, related control between PDN GWs, and mobility resources to the user plane. S2b is a reference point which provides related control and mobility resources to the user plane between ePDG and PDN GW.

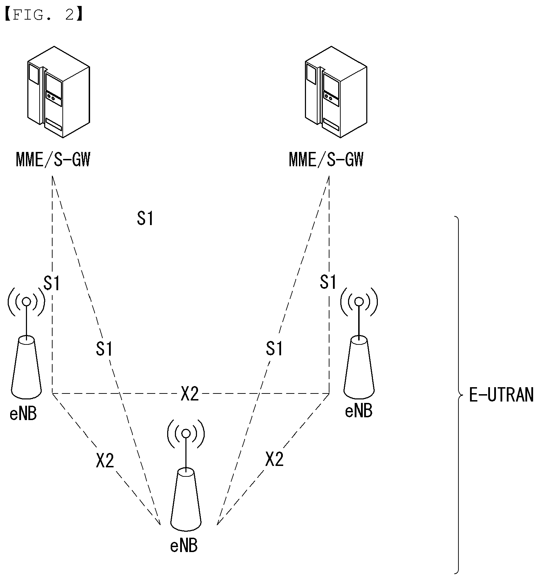

FIG. 2 illustrates one example of an Evolved Universal Terrestrial Radio Access Network (E-UTRAN) to which the present invention can be applied.

The E-UTRAN system is an evolved version of the existing UTRAN system, for example, and is also referred to as 3GPP LTE/LTE-A system. Communication network is widely deployed in order to provide various communication services such as voice (e.g., Voice over Internet Protocol (VoIP)) through IMS and packet data.

Referring to FIG. 2, E-UMTS network includes E-UTRAN, EPC and one or more UEs. The E-UTRAN includes eNBs that provide control plane and user plane protocol, and the eNBs are interconnected with each other by means of the X2 interface.

The X2 user plane interface (X2-U) is defined among the eNBs. The X2-U interface provides non-guaranteed delivery of the user plane Packet Data Unit (PDU). The X2 control plane interface (X2-CP) is defined between two neighboring eNBs. The X2-CP performs the functions of context delivery between eNBs, control of user plane tunnel between a source eNB and a target eNB, delivery of handover-related messages, uplink load management, and so on.

The eNB is connected to the UE through a radio interface and is connected to the Evolved Packet Core (EPC) through the S1 interface.

The S1 user plane interface (S1-U) is defined between the eNB and the Serving Gateway (S-GW). The S1 control plane interface (S1-MME) is defined between the eNB and the Mobility Management Entity (MME). The S1 interface performs the functions of EPS bearer service management, non-access stratum (NAS) signaling transport, network sharing, MME load balancing management, and so on. The S1 interface supports many-to-many-relation between the eNB and the MME/S-GW.

The MME may perform various functions such as NAS signaling security, Access Stratum (AS) security control, Core Network (CN) inter-node signaling for supporting mobility between 3GPP access network, IDLE mode UE reachability (including performing paging retransmission and control), Tracking Area Identity (TAI) management (for UEs in idle and active mode), selecting PDN GW and SGW, selecting MME for handover of which the MME is changed, selecting SGSN for handover to 2G or 3G 3GPP access network, roaming, authentication, bearer management function including dedicated bearer establishment, Public Warning System (PWS) (including Earthquake and Tsunami Warning System (ETWS) and Commercial Mobile Alert System (CMAS), supporting message transmission and so on.

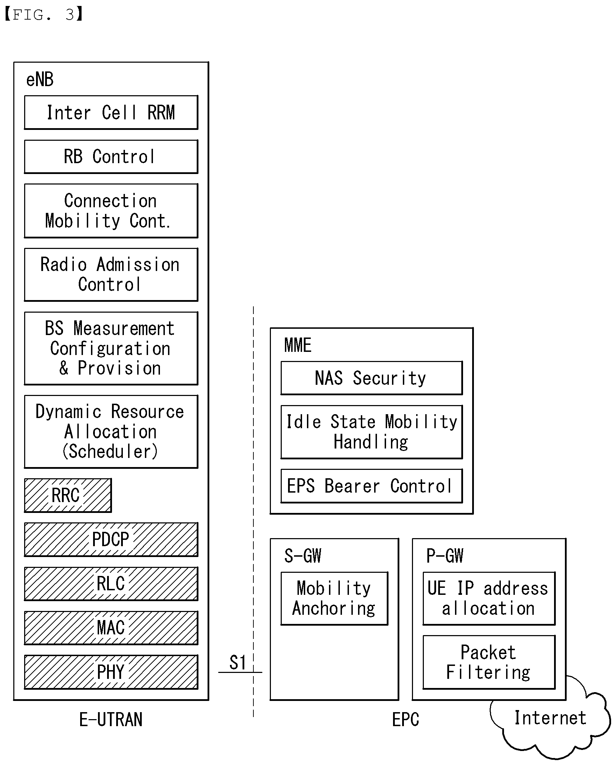

FIG. 3 exemplifies a structure of E-UTRAN and EPC in a wireless communication system to which the present invention can be applied.

Referring to FIG. 3, an eNB may perform functions of selecting gateway (e.g., MME), routing to gateway during radio resource control (RRC) is activated, scheduling and transmitting broadcast channel (BCH), dynamic resource allocation to UE in uplink and downlink, mobility control connection in LTE_ACTIVE state. As described above, the gateway in EPC may perform functions of paging origination, LTE_IDLE state management, ciphering of user plane, bearer control of System Architecture Evolution (SAE), ciphering of NAS signaling and intergrity protection.

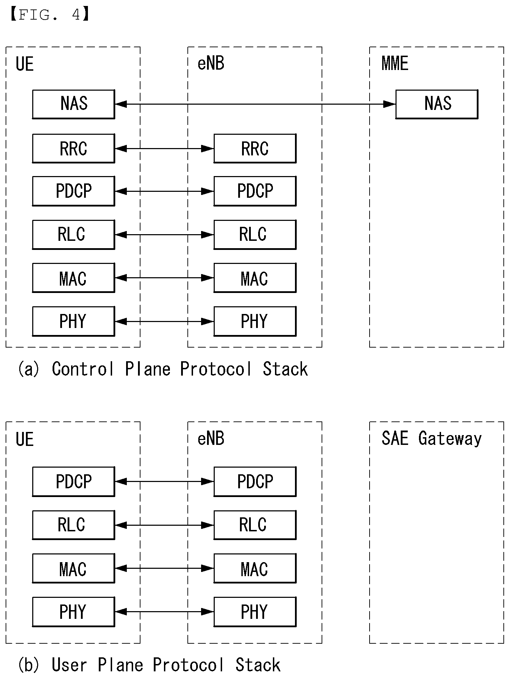

FIG. 4 illustrates a radio interface protocol structure between a UE and an E-UTRAN in a wireless communication system to which the present invention can be applied.

FIG. 4(a) illustrates a radio protocol structure for the control plane, and FIG. 4(b) illustrates a radio protocol structure for the user plane.

With reference to FIG. 4, layers of the radio interface protocol between the UE and the E-UTRAN can be divided into a first layer (L1), a second layer (L2), and a third layer (L3) based on the lower three layers of the Open System Interconnection (OSI) model, widely known in the technical field of communication systems. The radio interface protocol between the UE and the E-UTRAN consists of the physical layer, data link layer, and network layer in the horizontal direction, while in the vertical direction, the radio interface protocol consists of the user plane, which is a protocol stack for delivery of data information, and the control plane, which is a protocol stack for delivery of control signals.

The control plane acts as a path through which control messages used for the UE and the network to manage calls are transmitted. The user plane refers to the path through which the data generated in the application layer, for example, voice data, Internet packet data, and so on are transmitted. In what follows, described will be each layer of the control and the user plane of the radio protocol.

The physical layer (PHY), which is the first layer (L1), provides information transfer service to upper layers by using a physical channel. The physical layer is connected to the Medium Access Control (MAC) layer located at the upper level through a transport channel through which data are transmitted between the MAC layer and the physical layer. Transport channels are classified according to how and with which features data are transmitted through the radio interface. And data are transmitted through the physical channel between different physical layers and between the physical layer of a transmitter and the physical layer of a receiver. The physical layer is modulated according to the Orthogonal Frequency Division Multiplexing (OFDM) scheme and employs time and frequency as radio resources.

A few physical control channels are used in the physical layer. The Physical Downlink Control Channel (PDCCH) informs the UE of resource allocation of the Paging Channel (PCH) and the Downlink Shared Channel (DL-SCH); and Hybrid Automatic Repeat reQuest (HARQ) information related to the Uplink Shared Channel (UL-SCH). Also, the PDCCH can carry a UL grant used for informing the UE of resource allocation of uplink transmission. The Physical Control Format Indicator Channel (PCFICH) informs the UE of the number of OFDM symbols used by PDCCHs and is transmitted at each subframe. The Physical HARQ Indicator Channel (PHICH) carries a HARQ ACK (ACKnowledge)/NACK (Non-ACKnowledge) signal in response to uplink transmission. The Physical Uplink Control Channel (PUCCH) carries uplink control information such as HARQ ACK/NACK with respect to downlink transmission, scheduling request, Channel Quality Indicator (CQI), and so on. The Physical Uplink Shared Channel (PUSCH) carries the UL-SCH.

The MAC layer of the second layer (L2) provides a service to the Radio Link Control (RLC) layer, which is an upper layer thereof, through a logical channel. Also, the MAC layer provides a function of mapping between a logical channel and a transport channel; and multiplexing/demultiplexing a MAC Service Data Unit (SDU) belonging to the logical channel to the transport block, which is provided to a physical channel on the transport channel.

The RLC layer of the second layer (L2) supports reliable data transmission. The function of the RLC layer includes concatenation, segmentation, reassembly of the RLC SDU, and so on. To satisfy varying Quality of Service (QoS) requested by a Radio Bearer (RB), the RLC layer provides three operation modes: Transparent Mode (TM), Unacknowledged Mode (UM), and Acknowledge Mode (AM). The AM RLC provides error correction through Automatic Repeat reQuest (ARQ). Meanwhile, in case the MAC layer performs the RLC function, the RLC layer can be incorporated into the MAC layer as a functional block.

The Packet Data Convergence Protocol (PDCP) layer of the second layer (L2) performs the function of delivering, header compression, ciphering of user data in the user plane, and so on. Header compression refers to the function of reducing the size of the Internet Protocol (IP) packet header which is relatively large and contains unnecessary control to efficiently transmit IP packets such as the IPv4 (Internet Protocol version 4) or IPv6 (Internet Protocol version 6) packets through a radio interface with narrow bandwidth. The function of the PDCP layer in the control plane includes delivering control plane data and ciphering/integrity protection.

The Radio Resource Control (RRC) layer in the lowest part of the third layer (L3) is defined only in the control plane. The RRC layer performs the role of controlling radio resources between the UE and the network. To this purpose, the UE and the network exchange RRC messages through the RRC layer. The RRC layer controls a logical channel, transport channel, and physical channel with respect to configuration, re-configuration, and release of radio bearers. A radio bearer refers to a logical path that the second layer (L2) provides for data transmission between the UE and the network. Configuring a radio bearer indicates that characteristics of a radio protocol layer and channel are defined to provide specific services; and each individual parameter and operating methods thereof are determined. Radio bearers can be divided into Signaling Radio Bearers (SRBs) and Data RBs (DRBs). An SRB is used as a path for transmitting an RRC message in the control plane, while a DRB is used as a path for transmitting user data in the user plane.

The Non-Access Stratum (NAS) layer in the upper of the RRC layer performs the function of session management, mobility management, and so on.

A cell constituting the base station is set to one of 1.25, 2.5, 5, 10, and 20 MHz bandwidth, providing downlink or uplink transmission services to a plurality of UEs. Different cells can be set to different bandwidths.

Downlink transport channels transmitting data from a network to a UE include a Broadcast Channel (BCH) transmitting system information, PCH transmitting paging messages, DL-SCH transmitting user traffic or control messages, and so on. Traffic or a control message of a downlink multi-cast or broadcast service can be transmitted through the DL-SCH or through a separate downlink Multicast Channel (MCH). Meanwhile, uplink transport channels transmitting data from a UE to a network include a Random Access Channel (RACH) transmitting the initial control message and a Uplink Shared Channel (UL-SCH) transmitting user traffic or control messages.

Logical channels, which are located above the transport channels and are mapped to the transport channels. The logical channels may be distinguished by control channels for delivering control area information and traffic channels for delivering user area information. The control channels include a Broadcast Control Channel (BCCH), a Paging Control Channel (PCCH), a Common Control Channel (CCCH), a dedicated control channel (DCCH), a Multicast Control Channel (MCCH), and etc.

The traffic channels include a dedicated traffic channel (DTCH), and a Multicast Traffic Channel (MTCH), etc. The PCCH is a downlink channel that delivers paging information, and is used when network does not know the cell where a UE belongs. The CCCH is used by a UE that does not have RRC connection with network. The MCCH is a point-to-multipoint downlink channel which is used for delivering Multimedia Broadcast and Multicast Service (MBMS) control information from network to UE. The DCCH is a point-to-point bi-directional channel which is used by a UE that has RRC connection delivering dedicated control information between UE and network. The DTCH is a point-to-point channel which is dedicated to a UE for delivering user information that may be existed in uplink and downlink. The MTCH is a point-to-multipoint downlink channel for delivering traffic data from network to UE.

In case of uplink connection between the logical channel and the transport channel, the DCCH may be mapped to UL-SCH, the DTCH may be mapped to UL-SCH, and the CCCH may be mapped to UL-SCH. In case of downlink connection between the logical channel and the transport channel, the BCCH may be mapped to BCH or DL-SCH, the PCCH may be mapped to PCH, the DCCH may be mapped to DL-SCH, the DTCH may be mapped to DL-SCH, the MCCH may be mapped to MCH, and the MTCH may be mapped to MCH.

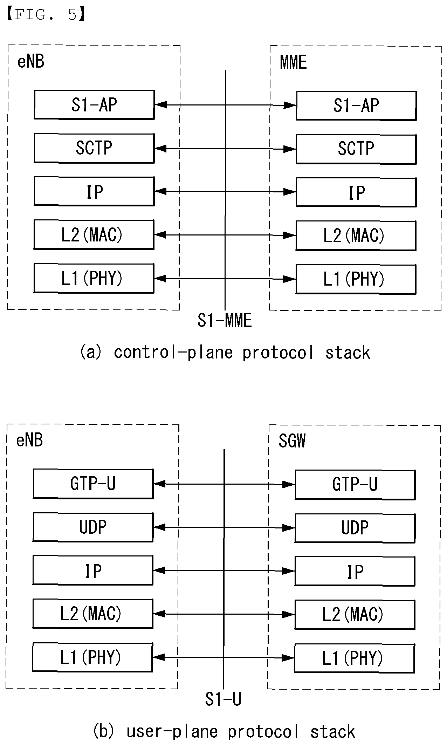

FIG. 5 illustrates an S1 interface protocol structure in a wireless communication system to which the present invention can be applied.

FIG. 5(a) illustrates the control plane protocol stack in the S1 interface, and FIG. 5(b) illustrates the user plane interface protocol structure in the S1 interface.

With reference to FIG. 5, the S1 control plane interface (S1-MME) is defined between the eNB and the MME. Similar to the user plane, the transport network layer is based on IP transmission. However, to ensure reliable transmission of message signaling, the transport network layer is added to the Stream Control Transmission Protocol (SCTP) layer which sits on top of the IP layer. The application layer signaling protocol is called S1 Application Protocol (S1-AP).

The SCTP layer provides guaranteed delivery of application layer messages.

The transport IP layer employs point-to-point transmission for Protocol Data Unit (PDU) signaling transmission.

For each S1-MME interface instance, single SCTP association uses a pair of stream identifiers for the S-MME common procedure. Only part of stream identifier pairs is used for the S1-MME dedicated procedure. The MME communication context identifier is allocated by the MME for the S1-MME dedicated procedure, and the eNB communication context identifier is allocated by the eNB for the S1-MME dedicated procedure. The MME communication context identifier and the eNB communication context identifier are used for identifying a UE-specific S1-MME signaling transmission bearer. The communication context identifier is delivered within each S1-AP message.

In case the S1 signaling transport layer notifies the S1AP layer of disconnection of signaling, the MME changes the state of the UE which has used the corresponding signaling connection to ECM-IDLE state. And the eNB releases RRC connection of the corresponding UE.

The S1 user plane interface (S1-U) is defined between eNB and S-GW. The S1-U interface provides non-guaranteed delivery of the user plane PDU between the eNB and the S-GW. The transport network layer is based on IP transmission, and the GPRS Tunneling Protocol User Plane (GTP-U) layer is used on top of the UDP/IP layer to deliver the user plane PDU between the eNB and the S-GW.

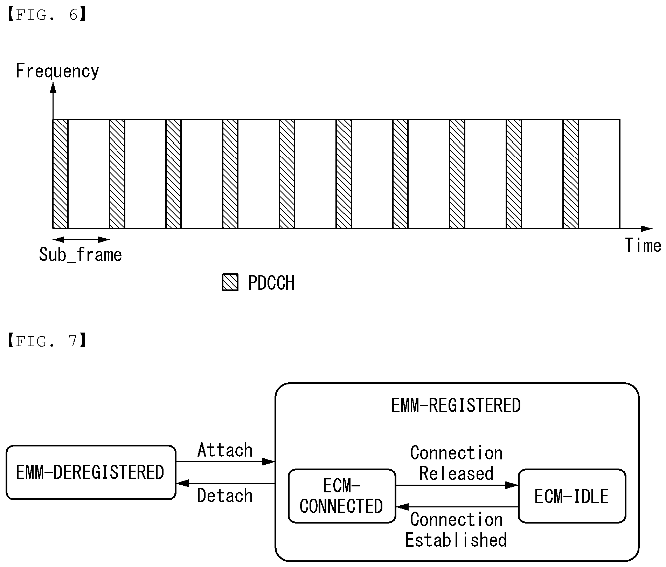

FIG. 6 is a diagram schematically exemplifying a structure of physical channel in a wireless communication system to which the present invention can be applied.

Referring to FIG. 6, the physical channel delivers signaling and data through radio resources including one or more subcarriers in frequency domain and one or more symbols in time domain.

One subframe that has a length of 1.0 ms includes a plurality of symbols. A specific symbol (s) of subframe (e.g., the first symbol of subframe) may be used for PDCCH. The PDCCH carries information for resources which are dynamically allocated (e.g., resource block, modulation and coding scheme (MCS), etc.).

EMM and ECM state

In what follows, EPS Mobility Management (EMM) and EPS Connection Management (ECM) states will be described.

FIG. 7 illustrates an EMM and ECM states in a wireless communication system to which the present invention can be applied.

With reference to FIG. 7, to manage mobility of the UE in the NAS layer defined in the control planes of the UE and the MME, EMM-REGISTERED and EMM-DEREGISTERED states can be defined according to the UE is attached to or detached from a network. The EMM-REGISTERED and the EMM-DEREGISTERED states can be applied to the UE and the MME.

Initially, the UE stays in the EMM-DEREGISTERED state as when the UE is first powered on and performs registering to a network through an initial attach procedure to connect to the network. If the connection procedure is performed successfully, the UE and the MME makes transition to the EMM-REGISTERED state. Also, in case the UE is powered off or the UE fails to establish a radio link (namely, a packet error rate for a radio link exceeds a reference value), the UE is detached from the network and makes a transition to the EMM-DEREGISTERED state.

Similarly, to manage signaling connection between the UE and the network, ECM-CONNECTED and ECM-IDLE states can be defined. The ECM-CONNECTED and ECM-IDLE states can also be applied to the UE and the MME. ECM connection consists of RRC connection formed between the UE and the eNB; and S1 signaling connection formed between the eNB and the MME. In other words, establishing/releasing an ECM connection indicates that both of the RRC connection and S1 signaling connection have been established/released.

The RRC state indicates whether the RRC layer of the UE is logically connected to the RRC layer of the eNB. In other words, in case the RRC layer of the UE is connected to the RRC layer of the eNB, the UE stays in the RRC_CONNECTED state. If the RRC layer of the UE is not connected to the RRC layer of the eNB, the UE stays in the RRC_IDLE state.

The network can identify the UE staying in the ECM-CONNECTED state at the level of cell unit and can control the UE in an effective manner.

On the other hand, the network is unable to know the existence of the UE staying in the ECM-IDLE state, and a Core Network (CN) manages the UE on the basis of a tracking area unit which is an area unit larger than the cell. While the UE stays in the ECM-IDLE state, the UE performs Discontinuous Reception (DRX) that the NAS has configured by using the ID allocated uniquely in the tracking area. In other words, the UE can receive a broadcast signal of system information and paging information by monitoring a paging signal at a specific paging occasion for each UE-specific paging DRX cycle.

When the UE is in the ECM-IDLE state, the network does not carry context information of the UE. Therefore, the UE staying in the ECM-IDLE state can perform a mobility-related procedure based on the UE such as cell selection or cell reselection without necessarily following an order of the network. In case the position of the UE differs from the position recognized by the network while the UE is in the ECM-IDLE state, the UE can inform the network of the corresponding position of the UE through a Tracking Area Update (TAU) procedure.

On the other hand, when the UE is in the ECM-CONNECTED state, mobility of the UE is managed by an order of the network. While the UE stays in the ECM-CONNECTED state, the network knows to which cell the UE currently belongs. Therefore, the network can transit and/or receiver data to or from the UE, control mobility of the UE such as handover, and perform cell measurement with respect to neighboring cells.

As described above, the UE has to make a transition to the ECM-CONNECTED state in order to receive a general mobile communication service such as a voice or data communication service. As when the UE is first powered on, the UE in its initial state stays in the ECM-IDLE state as in the EMM state, and if the UE successfully registers to the corresponding network through an initial attach procedure, the UE and the MEE make a transition to the ECM connection state. Also, in case the UE has already registered to the network but radio resources are not allocated as traffic is not activated, the UE stays in the ECM-IDLE state, and if new uplink or downlink traffic is generated for the corresponding UE, the UE and the MME make a transition to the ECM-CONNECTED state through a Service Request procedure.

EPS bearer

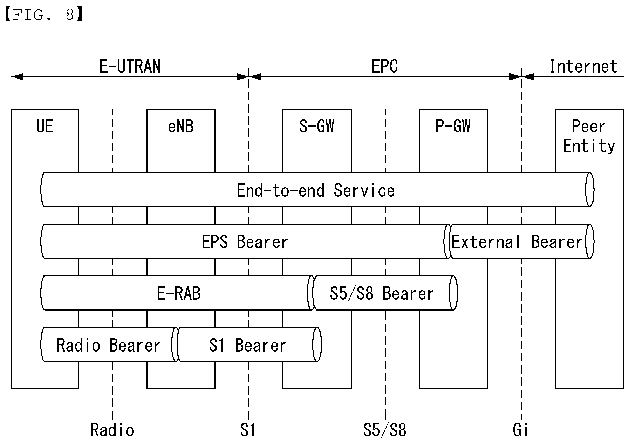

FIG. 8 illustrates a bearer structure in a wireless communication system to which the present invention can be applied.

When the UE is connected to a Packet Data Network (PDN) (which is the peer entity of FIG. 8), PDN connection is established, which can be called an EPS session. The PDN provides a service function such as the Internet or IP Multimedia Subsystem (IMS) through an external or internal IP network of the service provider.

An EPS session comprises one or more EPS bearers. The EPS bearer refers to the transmission path of traffic generated between the UE and the PDN GW for the EPS to deliver user traffic. One or more EPS bearers can be set up for each UE.

Each EPS bearer can be classified into E-UTRAN Radio Access Bearer (E-RAB) or S5/S8 bearer, and the E-RAB can be further divided into a Radio Bearer (RB) and S1 bearer. In other words, one EPS bearer corresponds to one RB, one S1 bearer, and one S5/S8 bearer.

The E-RAB delivers packets of the EPS bearer between the UE and the EPC. If an E-RAB is generated, the E-RAB bearer is one-to-one mapped to the EPS bearer. A Data Radio Bearer (DRB) delivers packets of the EPS bearer between the UE and the eNB. If a DRB is generated, it is one-to-one mapped to the EPS bearer/E-RAB. The S1 bearer delivers packets of the EPS bearer between the eNB and the S-GW. The S5/S8 bearer delivers EPS bearer packets between the S-GW and the P-GW.

The UE binds the EPS bearer in the uplink direction with a Service Data Flow (SDF). An SDF is a group of IP flow(s) obtained by classifying (or filtering) user traffic according to individual services. A plurality of SDFs can be multiplexed to the same EPS bearer by including a plurality of uplink packet filters. The UE stores mapping information between the uplink packet filter and the DRB to bind the SDF and the DRB with each other for uplink transmission.

The P-GW binds the SDF with the EPS bearer in the downlink direction. A plurality of SDFs can be multiplexed to the same EPS bearer by including a plurality of downlink packet filters. The P-GW stores mapping information between the downlink packet filter and the S5/S8 bearer to bind the SDF and the S5/S8 bearer with each other for downlink transmission.

The eNB stores one-to-one mapping information between the DRB and the S1 bearer to bind the DRB and the S1 bearer with each other. The S-GW stores one-to-one mapping information between the S1 bearer and the S5/S8 bearer to bind the S1 bearer and the S5/S8 bearer with each other for uplink/downlink transmission.

The EPS bearer can be one of two types: a default bearer and a dedicated bearer. The UE can have one default bearer and one or more dedicated bearers for each PDN. The minimum basic bearer that the EPS session can have with respect to one PDN is called default bearer.

The EPS bearer can be classified on the basis of its identity. The EPS bearer identity is allocated by the UE or the MME. The dedicated bearer(s) is combined with the default bearer by a Linked EPS Bearer Identity (LBI).

If the UE establishes an initial connection to the network through an initial attach procedure, an IP address is allocated to the UE to generate a PDN connection, and a default bearer is generated in the EPS interval. Unless the UE terminates the PDN connection, the default bearer is not released but maintained even when there is no traffic between the UE and the corresponding PDN; the default bearer is released when the corresponding PDN connection is terminated. At this time, not all the bearers acting as default bearers with respect to the UE across the whole interval are not activated; the S5 bearer connected directly to the PDN is maintained, and the E-RAB bearer related to radio resources (namely, DRB and S1 bearer) is released. And if new traffic is generated in the corresponding PDN, the E-RAB bearer is reconfigured to deliver traffic.

If the UE attempts to use a service of which the Quality of Service (QoS) (for example, Video on Demand (VoD) service) cannot be supported by the default bearer while using a service (for example, the Internet) through the default bearer, a dedicated bearer is created when the UE demands the high QoS service. In case there is no traffic from the UE, the dedicated bearer is released. The UE or the network can create a plurality of dedicated bearers depending on needs.

Depending on which service the UE uses, the IP flow can have different QoS characteristics. When the EPS session for the UE is established or modified, the network allocates network resources; or determines a control policy about QoS and applies the policy while the EPS session is maintained. The aforementioned operation is called Policy and Charging Control (PCC). A PCC rule is determined based on the operation policy (for example, a QoS policy, gate status, and charging method).

The PCC rule is determined in SDF unit. In other words, according to the service that the UE uses, the IP flow can have different QoS characteristics, IP flows having the same QoS are mapped to the same SDF, and the SDF becomes the unit by which the PCC rule is applied.

Main entities which perform the PCC function include a Policy and Charging Rules Function (PCRF) and Policy and Charging Enforcement Function (PCEF).

The PCRF determines a PCC rule for each SDF when the EPS session is established or modified and provides the PCC rule to the P-GW (or PCEF). After determining a PCC rule for the corresponding SDF, the P-GW detects the SDF for each IP packet transmitted or received and applies the PCC rule relevant to the corresponding SDF. When the SDF is transmitted to the UE via the EPS, the SDF is mapped to the EPS bearer capable of providing appropriate QoS according to the QoS rule stored in the P-GW.

PCC rules can be classified by dynamic PCC rules and pre-defined PCC rules. A dynamic PCC rule is provided dynamically from the PCRF to the P-GW when the EPS session is established or modified. On the other hand, a pre-defined PCC rule is predefined in the P-GW and activated/deactivated by the PCRF.

The EPS bearer includes a QoS Class Identifier (QCI) and Allocation and Retention Priority (ARP) as basic QoS parameters.

A QCI is a scalar used as a reference for accessing node-specific parameters which control bearer level packet forwarding treatment, where the scalar value is pre-configured by a network operator. For example, the scalar can be pre-configured by one of integer values ranging from 1 to 9.

The main purpose of the ARP is to determine whether a request for an establishment or modification of a bearer can be accepted or refused when only limited amount of resources are available. Also, the ARP can be used for the eNB to determine which bearer(s) to drop under the situation of limited resources (for example, handover).

EPS bearers can be classified to Guaranteed Bit Rate (GBR)-type bearers and non-GBR type bearers depending on QCI resource type. A default bearer is always a non-GBR type bearer, but a dedicated bearer can be a GBR or non-GBR type bearer.

A GBR-type bearer has GBR and Maximum Bit Rate (MBR) as QoS parameters in addition to the QCI and the ARP. The MBR indicates that fixed resources are allocated (bandwidth is guaranteed) for each bearer. On the other hand, a non-GBR type bearer has an Aggregated MBR (AMBR) as a QoS parameter in addition to the QCI and the ARP. The AMBR indicates that instead of allocating resources to individual bearers, maximum bandwidth is allocated, where other non-GBR type bearers can be used together.

As described above, if QoS of the EPS bearer is determined, QoS of each bearer is determined for each interface. Since the bearer of each interface provides QoS of the EPS bearer according to the interface, the EPS bearer, RB, and S1 bearer all have a one-to-one relationship among them.

If the UE attempts to use a service of which the QoS cannot be supported by the default bearer while using a service through the default bearer, a dedicated bearer is created.

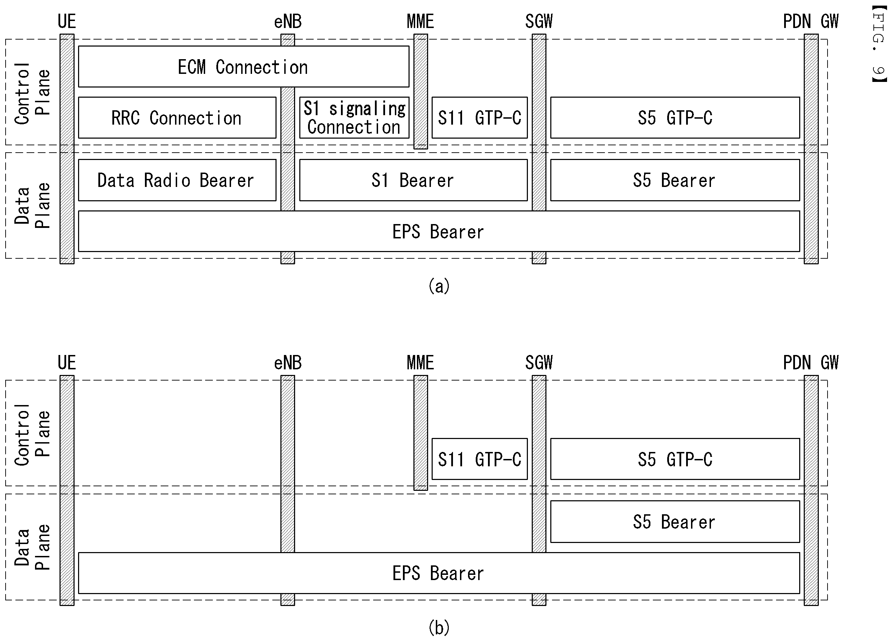

FIG. 9 illustrates transmission paths of a control plane and a user plane in an EMM registration state in a wireless communication system to which the present invention can be applied.

FIG. 9(a) illustrates ECM-CONNECTED state, and FIG. 9(b) illustrates ECM-IDLE state.

If the UE successfully attaches to the network and enters the EMM-Registered state, the UE receives a service by using an EPS bearer. As described above, the EPS bearer is divided into the DRB, S1 bearer, and S5 bearer according to the respective intervals.

As shown in FIG. 9(a), in the ECM-CONNECTED state where user traffic is present, NAS signaling connection, namely, ECM connection (RRC connection and S1 signaling connection) is established. Also, S11 GTP-C (GPRS Tunneling Protocol Control Plane) connection is established between the MME and the SGW, and S5 GTP-C connection is established between the SGW and the PDN GW.

Also, in the ECM-CONNECTED state, all of the DRB, S1 bearer, and S5 bearer are set up (namely, radio or network resources are allocated).

As shown in FIG. 9(b), in the ECM-IDLE state where there is no user traffic, the ECM connection (namely, RRC connection and S1 signaling connection) is released. However, the S11 GTP-C connection between the MME and the SGW; and the S5 GTP-C connection between the SGW and the PDN GW are retained.

Also, in the ECM-IDLE state, the DRB and the S1 bearer are all released, but the S5 bearer is retained (namely, radio or network resources are allocated).

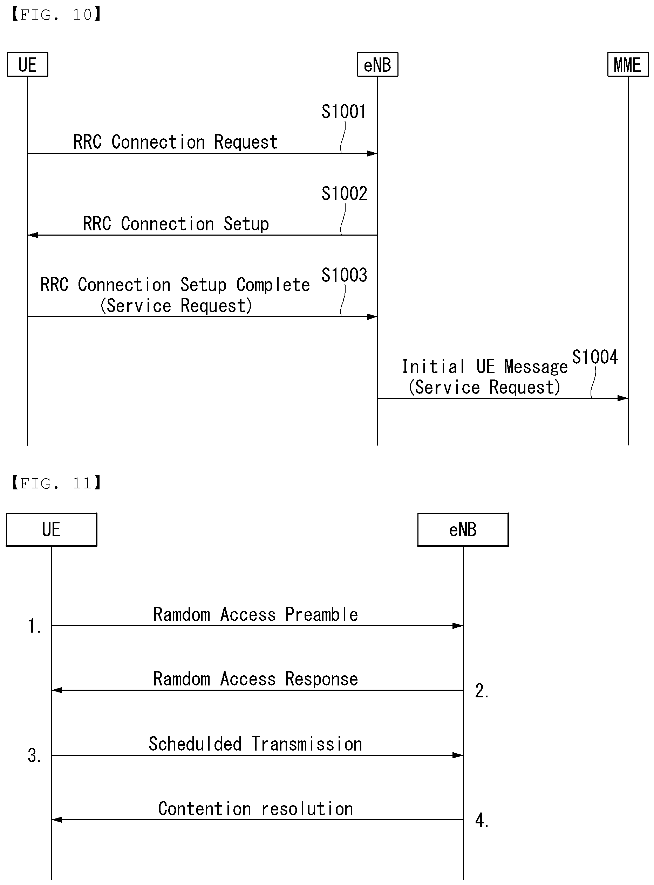

FIG. 10 is a diagram exemplifying an ECM connection establishment procedure in a wireless communication system to which the present invention can be applied.

Referring to FIG. 10, a UE transmits a RRC connection request message to an eNB for requesting RRC connection (step, S1001).

The RRC connection request message includes a UE Identity (e.g., SAE temporary mobile subscriber identity (S-TMSI) or random ID) and an establishment cause.

The establishment cause may be determined according to NAS procedure (e.g., attach, detach, tracking area update, service request and extended service request).

The eNB transmits a RRC connection setup message to the UE in response to the RRC connection request message (step, S1002).

After receiving the RRC connection setup message, the UE transits to RRC_CONNECTED mode.

The UE transmits a RRC connection setup complete message to the eNB for verifying successful completion of the RRC connection establishment (step, S1003).

The UE transmits the RRC connection setup complete message with NAS message (e.g., initial attach message, service request message, etc.) being included to the eNB.

The eNB acquires the service request message from the RRC connection setup complete message, and transmits this to the MME through the Initial UE message, which is S1AP message (step, S1004).

The control signals between the eNB and the MME may be delivered through S1AP message with S1-MME interface. The S1AP message is delivered through S1 signaling connection for each user, and the S1 signaling connection is defined by an identity pair (i.e., eNB UE S1AP ID and MME UE S1AP ID) such that the eNB and the MME distinguish the UE.

The eNB transmits the Initial UE message including eNB UE S1AP ID by allocating eNB UE S1AP ID, and the MME setup S1 signaling connection between the eNB and the MME by allocating MME S1AP UE ID by receiving the Initial UE message.

## Random Access Procedure

Hereinafter, a random access procedure which is provided in a LTE/LTE-A system will be described.

The random access procedure is used for a UE to obtain the UL synchronization with an eNB or to be allocated with UL radio resource. After turning on the power of UE, the UE acquires the DL synchronization with an initial cell and receives the system information. The UE gains the information of the set of usable random access preamble and that of the radio resource which is used for the transmission of random access preamble. The radio resource that is used for the transmission of random access preamble may be specified as the combination of at least one subframe index and an index on the frequency domain. The UE transmits the random access preamble that is randomly selected from the set of random access preamble, and the eNB that receives the random access preamble transmits the timing alignment (TA) value for the UL synchronization to the UE through the random access response. The UE acquires the UL synchronization in this way.

The random access procedure shows common in frequency division duplex (FDD) and time division duplex (TDD). The random access procedure is irrelevant to the cell size, and the number of serving cell in case of the carrier aggregation being configured.

First, the following shows the case that a UE performs the random access procedure.

- In case that the UE performs an initial access in a RRC idle state without any RRC connection to an eNB
- In case that the UE performs a RRC connection reestablishment procedure
- In case that the UE tries to an initial access to a target cell in a handover procedure
- In case that an random access procedure is requested by the order from eNB
- In case that there is any data that is going to be transmitted to DL in a non-synchronized condition during the RRC connected state
- In case that there is any data that is going to be transmitted to UL in a non-synchronized condition and in a condition that the radio resource designated for requesting the radio resource is not allocated during the RRC connected state
- In case that the UE positioning is performed in a condition that timing advance is required during the RRC connected state
- In case that restoration procedure is performed in a radio link failure or handover failure

In 3GPP Rel-10, it is considered that the timing advance (TA) value that is applicable to a specific cell (for example, PCell) in a wireless access system that supports the carrier aggregation is applied to a plurality of cells in common. However, the UE may aggregate a plurality of cells that are included in different frequency bands (that is, spaced apart on the frequency domain) or a plurality of cells that have different propagation characteristics. In addition, in case of a specific cell, for the extension of coverage or the removal of coverage hole, in a condition that small cells such as a remote radio header (RRH) (that is, repeater), a femto cell, or a pico cell, etc. or a secondary eNB (SeNB) is arranged in the cell, the UE performs a communication with the eNB (that is, macro eNB), in case of performing the communication with the secondary eNB through another cell, a plurality of cell may have different characteristics of the propagation delay. In this case, if the UL transmission is performed in a way that one TA value is commonly applied to a plurality of cells, it may profoundly affect the synchronization of UL signals that are transmitted on a plurality of cells. Accordingly, it may be desired to have a plurality of TAs in a condition of the CA that a plurality of cells are aggregated, and in 3GPP Rel-11, considered to allocate the TA independently in a specific cell group unit for supporting multiple TA. It is referred to as TA group (TAG), the TAG may include one or more cell(s), and the same TA may be commonly applied in one more cell (s) that are included in the TAG. For supporting the multiple TA, the MAC TA command control element is configured with 2-bit TAG ID and 6-bit TAG command field.

The UE on which a carrier aggregation is configured performs the random access procedure in case that the random access procedure previously described is required in connection with PCell. In case of TAG (that is, primary TAG (pTAG)) to which PCell belongs, the TA, which is determined based on PCell same as the existing case, or regulated through the random access procedure that accompanies PCell, may be applied to all the cells within the pTAG. Meanwhile, in case of TAG (that is, secondary TAG (sTAG)) that is configured with SCells only, the TA, which is determined based on a specific SCell within sTAG, may be applied to all the cells within the relevant sTAG, and in this time, the TA may be acquired through the random access procedure by being initiated by the eNB. Particularly, the SCell in the sTAG is set to be RACH resource, and the eNB requests a RACH access in SCell for determining TA. That is, the eNB initiates the RACH transmission on the SCells by PDCCH order that is transmitted from PCell. The response message for the SCell preamble is transmitted through PCell by using Random Access Radio Network Temporary Identifier (RA-RNTI). The TA that is determined based on SCell that successfully completes the random access may be applied to all the cells in the relevant STAG by the UE. Like this, the random access procedure may be performed in SCell as well in order to acquire timing alignment of the sTAG to which the relevant SCell belongs.

The LTE/LTE-A system provides both of the contention-based random access procedure that the UE randomly selects to use one preamble in a specific set and the non-contention-based random access procedure that the eNB uses the random access preamble that is allocated to a specific UE. However, the non-contention-based random access procedure may be used only for the handover procedure, the UE positioning, case of being requested by the order of eNB and/or the timing advance alignment for the sTAG. After the random access procedure is completed, a normal UL/DL transmission is made.

In the meantime, relay node (RN) also supports both of the contention-based random access procedure and the non-contention-based random access procedure. When the relay node performs the random access procedure, the RN suspends the RN subframe configuration at the moment. That is, it means that the RN subframe configuration is temporarily terminated. But, the RN subframe configuration is initiated at the time when the random access procedure has been successfully completed.

FIG. 11 is a diagram for describing the contention-based random access procedure in the wireless communication system to which the present invention can be applied.

(1) Message 1 (Msg 1)

First, the UE randomly selects one random access preamble (RACH preamble) from the set of the random access preamble that is instructed through system information or handover command, selects and transmits physical RACH (PRACH) resource which is able to transmit the random access preamble.

The random access preamble is transmitted by 6 bits in the RACH transmission channel, and the 6-bit consists of 5-bit random identity for identifying the RACH transmitted UE and the rest 1-bit (for example, indicating the size of msg 3) for representing additional information.

The eNB that receives the random access preamble from the UE decodes the preamble and acquires RA-RNTI. The RA-RNTI associated with the PRACH to which the random access preamble is transmitted is determined according to the time-frequency resource of the random access preamble that is transmitted by the corresponding UE.

(2) Message 2 (Msg 2)

The eNB transmits the random access response that is addressed to RA-RNTI that is acquired through the preamble on the Msg 1 to the UE. The random access response may include RA preamble index/identifier, UL grant that informs the UL radio resource, temporary cell RNTI (TC-RNTI), and time alignment command (TAC). The TAC is the information indicating a time synchronization value that is transmitted by the eNB in order to keep the UL time alignment. The UE renews the UL transmission timing using the time synchronization value. On the renewal of the time synchronization value, the UE renews or restarts the time alignment timer. The UL grant includes the UL resource allocation that is used for transmission of the scheduling message to be described later (Message 3) and the transmit power command (TPC). The TCP is used for determination of the transmission power for the scheduled PUSCH.

The UE, after transmitting the random access preamble, tries to receive the random access response of its own within the random access response window that is instructed by the eNB with system information or handover command, detects the PDCCH masked with RA-RNTI that corresponds to PRACH, and receives the PDSCH that is indicated by the detected PDCCH. The random access response information may be transmitted in a MAC packet data unit and the MAC PDU may be delivered through PDSCH. It is desirable to include the information of UE that is to receive the PDSCH, frequency and the time information of the PDSCH radio resource, and transmission type of the PDSCH, etc in the PDCCH. As described above, if succeeding in detecting the PDCCH that is transmitted to the UE itself, the UE may receive properly the random access response that is transmitted on the PDSCH according to the PDCCH information.

The random access response window represents the maximum time duration when the UE that transmits the preamble is waiting for the random access response message. The random access response window has the length of 'ra-ResponseWindowSize', which starts from the subframe after 3 subframes from the last subframe in which the preamble is transmitted. That is, the UE is waiting for receiving the random access response during the random access window secured after 3 subframes from the subframe in which the preamble transmission is completed. The UE may acquire the random access window size ('ra-ResponseWindowsize') parameter value through the system information, and the random access window size may be determined as a value from 2 to 10.

The UE terminates monitoring of the random access response if successfully receiving the random access response having the random access preamble index/identifier same as the random access preamble that is transmitted to the eNB. Meanwhile, if the random access response message has not been received until the random access response window is terminated, or if not received a valid random access response having the random access preamble index same as the random access preamble that is transmitted to the eNB, it is considered that the receipt of random access response is failed, and after that, the UE may perform the retransmission of preamble.

As described above, the reason why the random access preamble index is needed in the random access response is that one random access response may include the random access response information for one or more UEs, and so there is required an index to instruct for which UE the above UL grant, TC-RNTI, and TAC are available.

(3) Message 3 (Msg 3)

In case that the UE receives the random access response that is effective with the UE itself, the UE processes the information included in the random access response respectively. That is, the UE applies TAC and stores TC-RNTI. Also, by using UL grant, the UE transmits the data stored in the buffer of UE or the data newly generated to the eNB. In case of the initial access of UE, the RRC connection request that is delivered through CCCH after generating in RRC layer may be transmitted with being included in the message 3. In case of the RRC connection reestablishment procedure, the RRC connection reestablishment request that is delivered through CCCH after generating in RRC layer may be transmitted with being included in the message 3. Additionally, NAS access request message may be included.

The message 3 should include the identifier of UE. In the content based random access procedure, the eNB may not identify which UEs perform the random access procedure, but the eNB is required to identify the UE in order to solve the collision later on.

There are two ways how to include the identifier of UE. The first method is that the UE transmits the cell RNTI (C-RNTI) of its own through the UL transmission signal corresponding to the UL grant, if the UE has a valid C-RNTI that is already allocated by the corresponding cell before the random access procedure. Meanwhile, if the UE has not been allocated a valid C-RNTI before the random access procedure, the UE transmits including unique identifier of its own (for example, S-TMSI or random number). Normally the above unique identifier is longer that C-RNTI.

For the transmission on the UL SCH, the UE-specific scrambling is used. If the UE has been allocated C-RNTI, the scrambling is performed based on the C-RNTI. However, if the UE has not been allocated C-RNTI yet, the scrambling is not performed based on the C-RNTI but uses TC-RNTI that is received from the random access response instead. If transmitting the data corresponding to the UL grant, the UE initiates a contention resolution timer.

(4) Message 4 (Msg 4)

The eNB, in case of receiving the C-RNTI of corresponding UE through the message 3 from the UE, transmits the message 4 to the UE by using the received C-RNTI. Meanwhile, in case of receiving the unique identifier (that is, S-TMSI or random number) through the message 3 from the UE, the eNB transmits the 4 message to the UE by using the TC-RNTI that is allocated from the random access response to the corresponding UE. For example, the 4 message may includes the RRC connection setup message.

The UE waits for the instruction of eNB for collision resolution after transmitting the data including the identifier of its own through the UL grant included the random access response. That is, the UE attempts the receipt of PDCCH in order to receive a specific message. There are two ways how to receive the PDCCH. As previously mentioned, in case that the message 3 transmitted in response to the UL grant includes C-RNTI as an identifier of its own, the UE attempts the receipt of PDCCH using the C-RNTI of itself, and in case that the above identifier is the unique identifier (that is, S-TMSI or random number), the UE tries to receive PDCCH using the TC-RNTI that is included in the random access response. After that, in the former case, if the PDCCH is received through the C-RNTI of its own before the contention resolution timer is terminated, the UE determines that the random access procedure is performed and terminates the procedure. In the latter case, if the PDCCH is received through the TC-RNTI before the contention resolution timer is terminated, the UE checks on the data that is delivered by PDSCH, which is addressed by the PDCCH. If the content of the data includes the unique identifier of its own, the UE terminates the random access procedure determining that a normal procedure has been performed. The UE acquires C-RNTI through the 4 message, and after that, the UE and network are to transmit and receive a UE-specific message by using the C-RNTI.

The following is a description of the method for collision resolution in the random access.

The reason why a collision is occurred in performing the random access is that the number of random access preamble is limited basically. That is, it is not available that the eNB assigns a unique random access preamble for the UE to all the UEs, and the UE should randomly select one among the common random access preambles and transmit.

According to this, a case is occurred that two or more UEs select the identical random access preamble through the identical radio resource (PRACH resource) and transmit, but the eNB recognizes it as one random access preamble that is transmitted from one UE. Accordingly, the eNB transmits the random access response to the UE and the random access response is supposed to be received by one UE. However, as described above, as there is a possibility that a collision is occurred, two or more UEs are going to receive one random access response, and according to this, each UE performs an operation by the receipt of random access response. That is, there is a problem that two or more UEs transmit different data to the same radio resource by using one UL grant included in the random access response. According to this, the data transmission might be all failed, and depending on the location of UEs or transmission power, the data of a specific UE only may be received by the eNB. In the latter case, as all of the two or more UEs assume that the data transmission of its own are succeeded, the eNB should inform the fact to the corresponding UEs that they are failed in contention. That is, what to inform the fact of the failure or success in contention is referred to as contention resolution.

There are two ways of contention resolution. The one is to use the contention resolution timer, and the other is to transmit the identifier of successful UE to UEs. The former is applied to the case that the UE already has a unique C-RNTI before the random access procedure. That is, the UE that already has the C-RNTI transmits the data including the C-RNTI of itself according to the random access response and operates the contention resolution timer. And if the PDCCH information that is addressed by the C-RNTI of its own is received before the contention resolution timer is terminated, the UE determines itself to succeed in the contention and normally terminates the random access. In the contrary, if the PDCCH information that is addressed by the C-RNTI of its own is not received before the contention resolution timer is terminated, the UE determines itself to fail in the contention and reinitiates the random access procedure, or informs the fact of failure to the higher layer. In the latter case of the ways of contention resolution, that is, the case that is to transmit the identifier of successful UE, is used for what the UE does not have a unique C-RNTI before the random access procedure. That is, in case that the UE itself does not have C-RNTI, the UE transmits including a higher identifier (S-TMSI or random number) more than the C-RNTI of data according to the UL Grant information included in the random access response, and operates the contention resolution timer. In case that the data including the higher identifier of its own is transmitted to DL-SCH before the contention resolution timer is terminated, the UE determines that the random access procedure is successful. On the other hand, in case that the data including the higher identifier of its own is not transmitted to DL-SCH before the contention resolution timer is terminated, the UE determines that the random access procedure is failed.

Meanwhile, the operation of the non-contention-based random access procedure, unlike the contention-based random access procedure illustrated in FIG. 11, is terminated with the transmission of message 1 and message 2 only. However, the UE is going to be allocated a random access preamble from the eNB before transmitting the random access preamble to the eNB as the message 1. And the UE transmits the allocated random access preamble to the eNB as the message 1, and terminates the random access procedure by receiving the random access response from the eNB.

Service Request Procedure

Generally, a UE-triggered service request procedure is performed when trying to start new service initiated by UE.

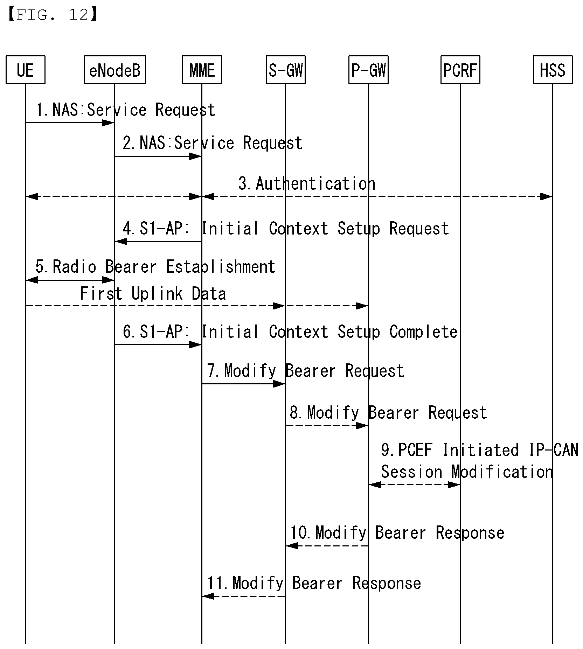

FIG. 12 illustrates a UE trigger Service Request procedure in a wireless communication system to which the present invention can be applied

1-2. The UE initiates a UE-triggered Service Request procedure by transmitting a Service Request message to the MME.
The Service Request message is delivered being included in an RRC connection setup complete message through the RRC connection and delivered being included in an initial UE message through the S1 signaling connection.
3. For authentication of the UE, the MME requests and receives information for the authentication from the HSS; and performs mutual authentication with the UE.
4. The MME transmits an Initial Context Setup Request message to the eNB so that the eNB can configure an S1 bearer with the S-GW and configure a DRB with the UE.
5. The eNB transmits an RRC Connection Reconfiguration message to the UE to create the DRB.
When this procedure is done, the creation of DRB is completed between the eNB and the UE, and all of uplink EPS bearers ranging from the UE to the P-GW are configured. The UE can transmit uplink traffic data to the P-GW.
6. The eNB transmits an Initial Context Setup Complete message including 'S1 eNB TEID' to the MME in response to the Initial Context Setup Request message.
7. The MME delivers the 'S1 eNB TEID' received from the eNB to the S-GW through a Modify Bearer Request message.

When this procedure is done, the creation of S1 bearer is completed between the eNB and the S-GW, and then all of the downlink EPS bearers ranging from the P-GW and the UE are configured. The UE can then receive downlink traffic data from the P-GW.

8. In case that a cell (E-UTRAN cell global Identifier; ECGI) where a UE is located or tracking area (TAI) is changed, the S-GW informs that by transmitting a modify bearer request message to the P-GW.

9. If needed, the P-GW can perform an IP connectivity access network (IP-CAN) session modification procedure with the PCRF.

10. Receiving a Modify Bearer Request message from the S-GW, the P-GW transmits a Modify Bearer Response message to the S-GW in response to the message.

11. The S-GW transmits a Modify Bearer Response message to the MME in response to the Modify Bearer Request message.

A network-triggered Service Request procedure is usually performed when the network attempts to transmit downlink data to the UE staying in the ECM-IDLE state.

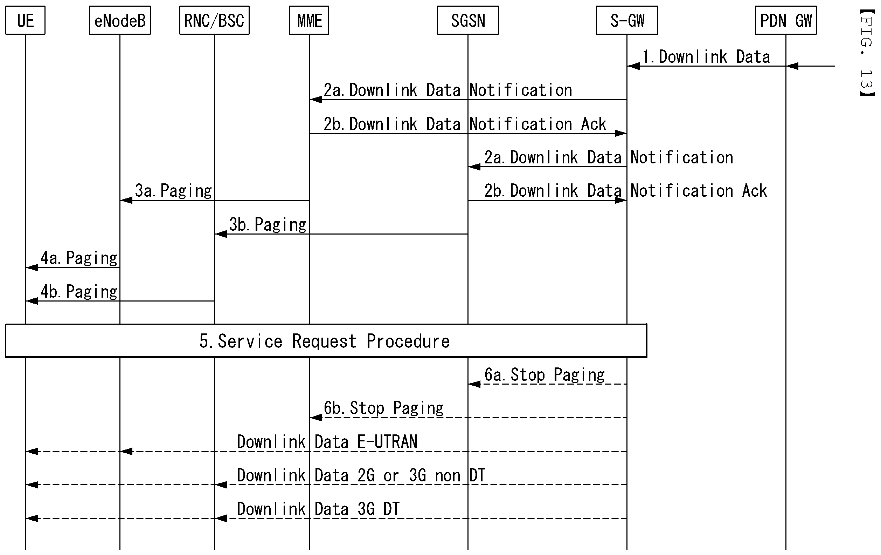

FIG. 13 is a diagram exemplifying a network trigger service request procedure in a wireless communication system to which the present invention can be applied.

1. If downlink data arrives at the P-GW via an external network, the P-GW delivers downlink data to the S-GW.

2. In case that a downlink S1 bearer is unable to transmit downlink data to an eNB (i.e., 'S1 eNB TEID' value is not exist in the S-GW) since the downlink S1 bearer is released (i.e., ECM-IDLE state), the S-GW buffers the received downlink data. And the S-GW transmits a downlink data notification message to an MME/SGSN where the eNB is registered for signaling connection and bearer configuration to the corresponding UE.
The MME/SGSN transmits a downlink data notification ACK message to the S-GW in response to the downlink data notification message.

3. The MME/SGSN transmits a paging message to all eNB/RNC (or base station controller; BSC) included in a tracking area where a UE registered recently.

4. When the eNB/RNC (or BSC) receives the paging message from the MME/SGSN, the eNB/RNC (or BSC) broadcasts the paging message.

5. A UE that notifies that there are downlink data toward itself setup ECM connection by performing a service request procedure. That is, in this case, the service request procedure is initiated by paging transmitted from network.
The Service Request procedure can be performed in the same way as the procedure of FIG. 12, and if the procedure is completed, the UE can receive downlink data from the S-GW.

6. When the paging response is received, the S-GW transmits "Stop Paging" message to the MME/SGSN.

When the MME/SGSN commands to transmit the paging transmission to the eNB/RNC (or BSC), the eNB/RNC (or BSC) calculates a paging occasion using an IMSI value and a DRX cycle of UE and transmits the paging message on the corresponding paging occasion. In case that there is no response from the UE for a specific duration in response to the paging transmission, the MME may regard it as paging transmission failure and command a Paging retransmission to the eNB/RNC (or BSC) or cells.

That is, the Paging retransmission is determined in case that the Service request of UE is not received at the MME, and the eNB does not supervise whether the paging is received or retransmit. In case that the MME transmits the paging to a great many cells, since a UE transmits a service request by being included in one of the cells, the eNB may determine that the corresponding UE is not existed in its cell.

Meanwhile, in case that the MME/SGSN is unable to receive a response from the UE even after the paging repetition/retransmission procedure, the MME/SGSN notifies Paging failure to the S-GW using a downlink data notification reject message.

When the downlink data notification Reject message is received, the S-GW may delete packet(s) which is buffered.

## Paging

The paging procedure is used in order to transmit paging information to a UE in RRC_IDLE mode in network, or to notify change of system information to a UE in RRC_IDLE/RRC_CONNECTED mode, or to notify ETWS primary notification and/or ETWS secondary notification to all UEs in RRC_IDLE/RRC_CONNECTED mode, or to notify CMAS notification to a UE in RRC_IDLE/RRC_CONNECTED mode.

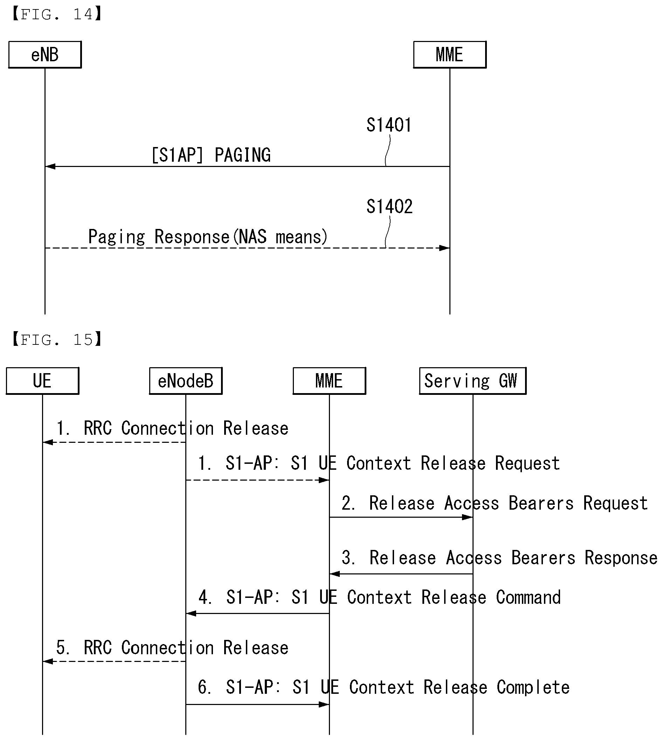

FIG. 14 is a diagram exemplifying a paging procedure in a wireless communication system to which the present invention can be applied.

Referring to FIG. 14, an MME initiates a paging procedure by transmitting a paging message to an eNB (step, S1401).

As described above, locations of UE in ECM-IDLE state is managed in the MME based on Tracking Area (TA). Here, since the UE may be registered by one or more TAs, the MME may transmit a paging message to a plurality of eNBs that cover the cell belonged to the TA(s) where the UE is registered. Here, each cell may be belonged to only one TA, and each eNB may include cells belonged to different TAs.

Here, the MME transmits a paging message to each eNB through S1AP interface (or S1AP protocol). Hereinafter, this may be referred to 'S1AP paging message' (or paging request).

The paging response replied to the MME is initiated in NAS layer, and the paging response may be transmitted by an eNB based on NAS-level routing information (step, S1402).

That is, the paging response may be corresponded to a service request NAS message transmitted from a UE. Like the example of FIG. 10, the service request NAS message may be transmitted to an eNB with being included in the RRC connection setup complete message, and may be transmitted to the MME with being included in the Initial UE message from the eNB.

Table 2 exemplifies the S1AP paging message.

[Table 2]

| IE/Group Name | Presence | Range | IE type and reference | Semantics description | Criticality | Assigne d Criticality |
|---|---|---|---|---|---|---|
| Message Type | M | | 9.2.1.1 | | YES | ignore |
| UE Identity Index value | M | | 9.2.3.1 0 | | YES | ignore |
| UE Paging Identity | M | | 9.2.3.1 3 | | YES | ignore |
| Paging DRX | O | | 9.2.1.1 6 | | YES | ignore |
| CN Domain | M | | 9.2.3.2 2 | | YES | ignore |
| List of TAIs | | 1 | | | YES | ignore |
| >TAI List Item | | 1 .. <maxno ofTAIs > | | | EACH | ignore |
| »TAI | M | | 9.2.3.1 6 | | - | |
| CSG Id List | | 0..1 | | | GLOBAL | ignore |
| >CSG Id | | 1.. <maxno ofCSGI d> | 9.2.1.6 2 | | - | |
| Paging Priority | O | | 9.2.1.7 8 | | YES | ignore |
| UE Radio Capability for Paging | O | | 9.2.1.9 8 | | YES | ignore |

Referring to Table 2, IE/Group Name represents a name of an information element (IE) or an IE group. 'M' in the Presence field is a mandatory IE, and represents an IE/IE group included in a message always. 'O' is an optional IE and represents an IE/IE group included or may not be included in a message. 'C' is a conditional IE and represents an IE/IE group included in a message only when a specific condition is satisfied. The Range field represents a number of which repeated IEs/IE groups is available to be repeated.

The IE type and reference field represents a type of the corresponding IE (e.g., ENUMERATED, INTEGER, OCTET STRING, etc.), and in case that a range of a value that the corresponding IE may have is existed, represents the range of the value.

The Criticality field represents criticality information that is applied to an IE/IE group. The criticality information means information indicating how a reception terminal operates in case that the reception terminal does not understand all or a part of the IE/IE group. The sign, '-', represents that the criticality information is not applied, and the sign 'YES' represents the criticality information is applied. 'GLOBAL' represents that an IE and repeated IE have one piece of common criticality information. "EACH' represents that each of repeated IE has unique criticality information. Assigned Criticality field represents actual criticality information.

The information element (IE) or IE group included in the S1AP paging message will be described in more detail below.

Message type IE identifies a message which is transmitted.

UE Identity Index value IE is used for an eNB to calculate Paging Frame (PF) (e.g., UE Identity Index=UE IMSI mod 1024).

UE Paging Identity IE is an identity for identifying a UE to be paged, and is indicated by one of SAE temporary mobile subscriber identity (S-TMSI). The S-TMSI means an identity that is available to uniquely identify a UE among one MME group.

In case of normal paging, S-TMSI is used as a UE paging identity. On the other hand, in case of IMSI being used as a UE paging identity, this is paging with IMSI. In case that the UE receives paging with the IMSI value, the UE performs a re-attach procedure.

In case that a UE uses a UE-specific DRX cycle length, Paging DRX IE is used to calculate paging frame (PF) at an eNB. The UE may specify the DRX cycle length in the attach request message or tracking area update (TAU) message.

CN Domain IE indicates whether the paging is generated in circuit switched (CS) domain or packet switched (PS) domain.

Tracking Area Identity (TAI) List IE is used to notify a TA in which a paging message should be broadcasted to an eNB. The TAI means an identity which is used to uniquely identify TA.

Closed Subscriber Group (CSG) ID List IE represents a CSG set where a UE is subscribed. This prevents an eNB from paging to a UE in a CSG cell where the UE is not subscribed.

Paging Priority IE indicates a paging priority for paging UE.

UE Radio Capability for Paging IE for paging includes paging-specific UE radio capability information.

The eNB that receives S1AP paging message from the MME configures a paging message (hereinafter, referred to "RRC paging message' (or paging information)).

Table 3 exemplifies a RRC paging message.

[Table 3]

```
-- ASN1START

Paging ::=                          SEQUENCE {
    pagingRecordList                PagingRecordList       OPTIONAL,    -- Need ON
    systemInfoModification          ENUMERATED {true}      OPTIONAL,    -- Need ON
    etws-Indication                 ENUMERATED {true}      OPTIONAL,    -- Need ON
    nonCriticalExtension            Paging-v890-IEs        OPTIONAL     -- Need OP
}

    Paging-v890-IEs ::=             SEQUENCE {
    lateNonCriticalExtension        OCTET STRING           OPTIONAL,    -- Need OP
    nonCriticalExtension            Paging-v920-IEs        OPTIONAL     -- Need OP
}

    Paging-v920-IEs ::=             SEQUENCE {
    cmas-Indication-r9              ENUMERATED {true}      OPTIONAL,    -- Need ON
    nonCriticalExtension            Paging-v1130-IEs       OPTIONAL     -- Need OP
}

Paging-v1130-IEs ::=                SEQUENCE {
    eab-ParamModification-r11       ENUMERATED {true}      OPTIONAL,    -- Need ON
    nonCriticalExtension            SEQUENCE {}            OPTIONAL     -- Need OP
}

PagingRecordList ::=                SEQUENCE (SIZE (1..maxPageRec)) OF PagingRecord
```

(continued)

```
PagingRecord ::=                    SEQUENCE {
    ue-Identity                     PagingUE-Identity,
    cn-Domain                       ENUMERATED {ps, cs},
    ...
}

PagingUE-Identity ::=               CHOICE {
    s-TMSI                          S-TMSI,
    imsi                            IMSI,
    ...
}

IMSI ::=                            SEQUENCE (SIZE (6..21)) OF IMSI-Digit

IMSI-Digit ::=                      INTEGER (0..9)

-- ASN1STOP
```

Referring to Table 3, a single RRC paging message of UE may carry information of multiple S1AP paging messages. That is, the RRC paging message may include multiple paging records (e.g., 16) for paging multiple UEs.

Each paging record includes a UE-Identity field and a CN domain field. This is a content which is transmitted from a S1AP paging message.

The systemInfoModification field is not delivered from the S1AP paging message, but is generated by an eNB. This field is used for triggering such that a UE re-acquires a system information block (SIB) set.

The Extended Access Barring (EAB)-ParamModification field is used to indicate change of EAB parameter (SIB 14).

The ETWS-Indication field is not delivered from the S1AP paging message, but is generated by an eNB. This field is applied only to an ETWS capable UE, and is used to trigger such that the corresponding UE re-acquires SIB 1. The SIB 1 content indicates ETWS content in SIB 10 and SIB 11 to a UE.

The CMAS-Indication field is applied only to a CMAS capable UE, and is used to trigger such that the corresponding UE re-acquires SIB 1. The SIB 1 content indicates CMAS content in SIB 12 to a UE.

As such, the eNB that configures the RRC paging message transmits downlink control information (DCI) where cyclic redundancy check (CRC) which is scrambled to paging-RNTI (P-RNTI) to a UE in the PDCCH, and transmits the RRC paging message to the UE through the PDSCH.

That is, an eNB delivers the RRC paging message through the PCCH logical channel, the PCH transport channel and the PDSCH physical channel to a UE.

In more detail, the eNB determines a PDCCH format according to the DCI that will be sent to the UE, and attaches CRC to the DCI. According to the owner or use of the PDCCH, a unique radio network temporary identifier (RNTI) is scrambled (or masked) to CRC. For the PDCCH for a specific UE, a unique identity of UE (e.g., cell-RNTI; C-RNTI) may be masked to CRC. Or, for the PDCCH for a paging message, a paging indication identity (e.g., paging-RNTI; P-RNTI) may be masked to CRC.

That is, a UE monitors the PDCCH based on P-RNTI in a subframe belonged to its paging occasion. And if the UE detects the PDCCH masked by P-RNTI, the UE decodes the DCI transmitted on the PDCCH. The DCI indicates the PDSCH resource where the paging message is transmitted. And the UE decodes the RRC paging message from the PDSCH resource indicated in the DCI.

The paging cycle may be determined in a cell-specific manner, or determined in a UE-specific manner. In addition, the paging occasion is determined based on its paging cycle and its identity (i.e., IMSI) for each UE. Accordingly, the paging message is not transmitted to all UEs on an available paging occasion from an eNB, but the paging message is transmitted on the paging occasion of the corresponding UE. The paging occasion will be described in more detail later.

The paging procedure may be used for change of system information, reception of cell broadcast message (i.e., ETWS/CAMS warning message) and notification of EAB as well as notifying reception of individual UE's Mobile Terminated (MT) call.

In case that a UE identity (e.g., IMSI or S-TMSI) is included (i.e., in case that the paging procedure is used for MT call) in one of paging records included in the RRC paging message, the UE in RRC_IDLE mode initiates a random access procedure for establishing RRC connection (e.g., transmitting service request) with network.

Also, in case that system information modification (systemInfoModification) is included in the RRC paging message, a UE re-acquires the system information which is required by using a system information acquisition procedure.

In addition, in case that the ETWS indication (etws-Indication) is included in the RRC paging message and a UE supports the ETWS, the UE re-acquires SIB 1 immediately. That is, the UE does not wait for the boundary of the next system information modification cycle. And if the scheduling information list (schedulingInfoList) included in SIB 1 indicates that SIB 10 is existed, the UE acquires SIB 10 based on the scheduling information (schedulingInfor). In addition, if the scheduling information list (schedulingInfoList) included in SIB 1 indicates that SIB 11 is existed, the UE acquires SIB 11 based on the scheduling information (schedulingInfor).

Also, CMAS indication (cmas-Indication) is included in the RRC paging message and a UE supports CMAS, the UE re-acquires SIB 1 immediately. That is, the UE does not wait for the boundary of the next system information modification cycle. And if the scheduling information list (schedulingInfoList) included in SIB 1 indicates that SIB 12 is existed, the UE acquires SIB 12 based on the scheduling information (schedulingInfor).

As such, in case that a cell broadcast message (i.e., ETWS/CAMS message) indication is included in the RRC paging message, a UE receives SIB 10, SIB 11 and SIB 12 by referring to schedulingInfoList of SIB 1. The received SIB 10, SIB 11 and SIB 12 are delivered to a higher layer (e.g., RRC layer) of UE. In the higher layer of UE, the UE displays the message identifier included in the cell broadcast message which is delivered through SIB 10, SIB 11 and SIB 12 if the message identifier is included in a search list of the UE. And otherwise, the UE discard it.

In addition, in case that a UE in RRC_IDLE mode supports the EAB and the EAB parameter modification (eab-ParamModification) field is included in the RRC paging message, the UE regards SIB 14 which is stored before is not valid, and re-acquires SIB 1 immediately. That is, the UE does not wait for the boundary of the next system information modification cycle. And the UE re-acquires SIB 14 using the system information acquisition procedure.

Hereinafter, a paging occasion will be described.

3GPP LTE/LTE-A system defines discontinuous reception (DRX) technique of UE in order to minimize the power consumption of UE.

A UE that uses the DRX monitors whether a paging message is transmitted only one paging occasion for every Paging cycle (i.e., DRX cycle).

One Paging Frame (PF) means one radio frame that may include one or more paging occasion(s).

One paging occasion (PO) means one subframe where the P-RNTI transmitted on the PDCCH that addresses a paging message may be existed. That is, the paging occasion is defined as a specific subframe in a PF that a UE checks a paging message.

The PF and the PO are determined by using IMSI and DRX values of UE. The UE may calculate the PF and the PO using its IMSI and DRX values. In addition, an eNB may also calculate the PF and the PO for each UE through the IMSI value which is delivered from the MME.

The DRX parameter (i.e., paging/PCCH configuration information) may be transmitted with being included in a common radio resource configuration ('RadioResourceConfigCommon') IE which is a RRC message used for specifying common radio resource configurations. The common radio resource configuration IE may be transmitted through a RRC message such as a RRC connection reconfiguration message or an S1 message. The S1 message is a message which is used for transmitting one or more SIBs.

In addition, a UE may also request its DRX cycle through an attach request or a tracking area update (TAU) request message. Here, a DRX cycle length set that the UE may request is identical to the length set which is used in the system information.

Table 4 exemplifies the PCCH configuration information in the common radio resource configuration IE.

[Table 4]

```
PCCH-Config ::= SEQUENCE {
    defaultPagingCycle ENUMERATED {
                    rf32, rf64, rf128, rf256},
    nB ENUMERATED {
                    fourT, twoT, oneT, halfT, quarterT,
  oneEighthT,
                    oneSixteenthT, oneThirtySecondT}
                    }
```

Referring to Table 4, the PCCH configuration information includes the 'defaultPagingCycle' field that indicates a default paging cycle length and the parameter 'nB' for acquiring the paging frame and the paging occasion.

The 'defaultPagingCycle' field has a default paging cycle length, and setup as one value of {rf32, rf64, rf128, rf256}. The rf means radio frame, and the numbers behind the "rf' means the number of radio frames. For example, if 'defaultPagingCycle'=rf32, the paging default cycle includes 32 radio frames, and if 'defaultPagingCycle'=rf64, the paging default cycle includes 64 radio frames.

The value of "nB' parameter is indicated by a multiple of 'T' (4T, 2T, T, T/2, T/4, T/8, T/16 or T/32). For example, if 'nB'=fourT, the parameter value of 'nB' is 4*T, and if 'nB'= quarterT, the parameter value of 'nB' is T/4.

Here, 'T' represents a DRX cycle of UE. 'T' is determined to the smallest value among a UE-specific DRX cycle and the basic DRX cycle ('defaultPagingCycle' field value) which is broadcasted in the system information. In case that the UE-specific DRX cycle is not setup by a higher layer, 'T' is determined to the default DRX cycle.

The PF is determined according to Equation 1 below.

$$[Equation\ 1]$$

$$SFN\ mod\ T = (T\ div\ N) * (UE\ ID\ mod\ N)$$

In Equation 1, N represents min(T, nB), and UE_ID represents (IMSI mod 1024).

A UE does not monitor all subframes of the PF which is determined as above, but monitors only the subframe which is distinguished by the PO determined by Equation 2 below and Table 5 (or Table 6).

$$[Equation\ 2]$$

$$i\_s = floor(UE\_ID/N)\ mod\ Ns$$

i_s = floor(UE_ID/N) mod Ns

In Equation 2, Ns represents max(1, nB/T).

Table 5 exemplifies a subframe pattern for determining the PO in FDD.

[Table 5]

| Ns | PO when i_s=0 | PO when i_s=1 | PO when i_s=2 | PO when i_s=3 |
|---|---|---|---|---|
| 1 | 9 | N/A | N/A | N/A |
| 2 | 4 | 9 | N/A | N/A |
| 4 | 0 | 4 | 5 | 9 |

Table 6 exemplifies a subframe pattern for determining the PO in TDD.

[Table 6]

| Ns | PO when i_s=0 | PO when i_s=1 | PO when i_s=2 | PO when i_s=3 |
|---|---|---|---|---|
| 1 | 0 | N/A | N/A | N/A |
| 2 | 0 | 5 | N/A | N/A |
| 4 | 0 | 1 | 5 | 6 |

By applying i_s value which is determined by Equation 2 above to Table 5 and Table 6, the subframe index that corresponds to the PO is determined. That is, a UE monitors only the subframe that corresponds to the PO in the PF which is determined.

**S1 release procedure**

An S1 release procedure is used for releasing logical S1-AP signaling connection (through S1-MME) for UE and all S1 bearers (in S1-U).

This procedure changes UE state from an ECM-CONNECTED state to an ECM-IDLE state, and all UE related context information in an eNB are deleted. For example, when S1-AP signaling connection is lost owing to loss of signaling transmission or to failure of an eNB or MME, the S1 release procedure is locally performed by the eNB or the MME. When the S1 release procedure is locally performed by the eNB or the MME, each node locally performs the operations according to the flow of procedure shown in FIG. 15 below.

Start of the S1 release procedure is on any one of the followings.

- For example, eNB-initiation due to operation and management (O&M) intervention, unspecified failure, user inactivity, repeated RRC signaling integrity check failure, release due to UE generated signaling connection release, CS fallback triggered, Inter-RAT redirection, and so on
- For example, MME-initiation due to authentication failure, detach, unallowable CSG cell (e.g., CSG ID of the CSG cell currently used is terminated or removed from CSG subscriber data), and so on.

FIG. 15 is a diagram exemplifying an S1 release procedure in a wireless communication system to which the present invention can be applied.

In FIG. 15, both of the eNB-initiation and the MME-initiation are exemplified.

1a. In a specific case, an eNB may release signaling connection of UE before requesting release of S1 context to MME or with the request (e.g., the case that an eNB initiates a RRC connection release for CS fallback by redirection).

1b. When an eNB detects that signaling connection of UE or all radio bearers for the corresponding UE are required to be released, the eNB transmits an S1 UE context release request (cause) message to MME.

Here, the cause indicates the reason of release (e.g., operation and management (O&M) Intervention, unspecified failure, user inactivity, repeated integrity check failure or release due to UE generated signaling connection release).

Here, step 1 is performed only in case that the eNB-initiated S1 release procedure is considered. When the MME-initiated S1 release procedure is considered, step 1 is not performed, and the procedure is started from step 2.

2. An MME transmits a release access bearers request (abnormal release of radio link indication) message to an S-GW for requesting release of all S1-U bearers for UE. This message is triggered by an S1 release request message from the eNB or other MME event. The abnormal release of radio link indication is included in case that the S1 release procedure is due to an abnormal release of radio link.

3. The S-GW releases all eNB-related information (address and tunnel end point identifier (TEID)), and responds to the MME by a release access bearers response message. The other elements of S-GW context of UE are not influenced.

The S-GW maintains the S1-U configuration that the S-GW allocated for bearer of UE.

When downlink packets are arrived for UE, the S-GW starts to buffer downlink packets which are received for UE, and initiates a network-triggered service request procedure.

Based on the policy of operator, the S-GW may be used to determine the subsequent determinations to trigger discontinuation of PDN charge using the received abnormal release of radio link indication.

4. The MME releases S1 by transmitting the S1 UE context release command (cause) message to the eNB.

5. If the RRC connection is still not released, the eNB transmits a RRC connection release message to the UE in AM mode. If the RRC connection release message is received and responded by UE, the eNB deletes context of UE.

6. The eNB checks S1 release by replying an S1 UE context release complete) (ECGI, TAI) message to the MME. The signaling connection between the MME and eNB for the corresponding UE is also released. This step is, for example, performed immediately after step 4 in order not to be retarded in a situation that the UE does not respond to the RRC connection release.

The MME deletes eNB-related information ("eNB address used for S1-MME", "MME UE S1 AP ID" and "eNB UE S1AP ID") from the MME context. However, the MME maintains the remaining information of the MME context of UE including the S1-U configuration information (address and TEID) of S-GW. All non-guaranteed beat ratio (non-GBR) EPS bearers which are established for the corresponding UE are preserved in the MME and the S-GW.

If the cause of S1 release is due to the User Inactivity and Inter-RAT redirection, the MME preserves the GBR bearers. If the cause of S1 release is due to CS fallback trigger, a procedure for bearer handling may be performed. Otherwise (e.g., in case that radio connection with UE is disconnected, S1 signaling connection is disconnected, eNB failure, etc.), the MME triggers an MME initiated dedicated bearer deactivation procedure for GBR bearers of UE after the S1 release procedure is completed.

When local IP access (LIPA) is activated for PDN connection, a home eNB (HeNB) notifies to release a direct user plane path to the HeNB to a collocated local gateway (L-GW) through internal signaling. When downlink packets for UE are arrived after the direct user plane path is released, the L-GW delivers the first packet to the S-GW through S5 tunnel such that the S-GW initiates a network-triggered service request procedure.

**Paging method for UE in coverage enhancement**

Currently, the coverage enhancement has been discussed for low cost MTC UE.

The coverage enhancement means operations for supporting such that a UE is available to receive data successfully in a coverage enhancement level (CE level) by transmitting the same data (or signal/channel) repeatedly according to the CE level (e.g., 0dB, 6dB, 12dB and 18dB) that the corresponding UE requires, considering the case that a UE (e.g., UE for M2M use, low complexity UE, MTC UE, etc.) supporting the coverage enhancement is located in a shadow area (e.g., buried under the ground, underground, etc.) or cell edge. That is, the UE in the enhanced coverage means a UE that requires use of the enhanced coverage functionality in order to access a cell.

Only in case that it is indicated that an access of UE in the enhanced coverage is supported in the system information (e.g., master information block (MIB)) of cell, the UE may access cell by using the enhanced coverage functionality. Otherwise, the UE may determine that access to cell is barred.

A UE in the enhanced coverage receives a system information block (SIB) transmitted using different time/frequency resources in comparison with normal UE. A UE in the enhanced coverage may have a limited transport block size (TBS; e.g., 1000 bits) for broadcasting and unicasting. A UE in the enhanced coverage determines scheduling information for SIB1 which is specified for the UE in the enhanced coverage based on information in a Master Information Block (MIB). The scheduling information for other SIB is given in SIB 1 which is specified for the UE in the enhanced coverage. A BCCH modification cycle for a UE in the enhanced coverage may correspond to a multiple of the BCCH modification cycle provided in SIB2. The SIB transmission occasion in system information (SI) window is provided in SIB1 which is specified for a UE in the enhanced coverage. A UE in the enhanced coverage may acquire an S1 message in S1 window. The maximum count (e.g., 4) of the SI message that may be acquired in the S1 window may be fixed.

A UE in the enhanced coverage, if necessary, may use or acquire legacy system information when it is in a normal coverage. A UE in the enhanced coverage is not required to detect change of SIB when it is in RRC_CONNECTED state. A UE in RRC_IDLE state does not notify change of CE level to network.

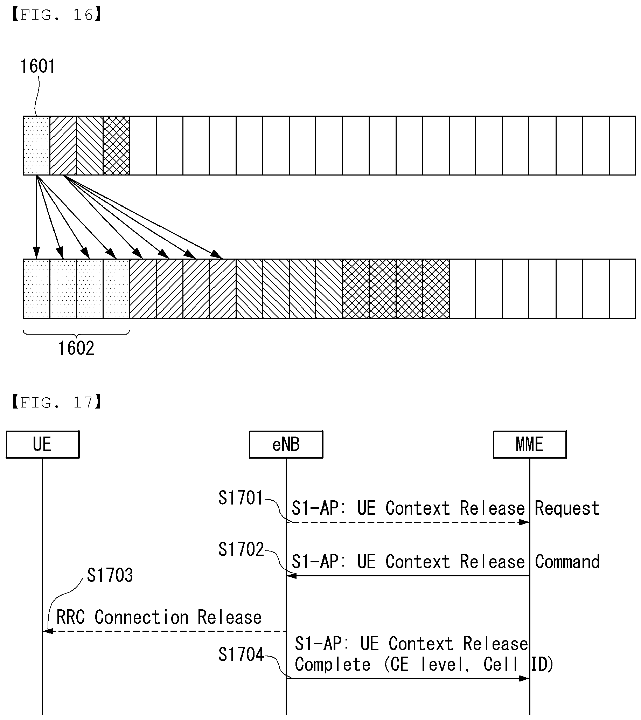

FIG. 16 is a diagram exemplifying coverage enhancement operations in a wireless communication system to which the present invention can be applied.

Referring to FIG. 16, by transmitting (1602) a single data (or signal/channel; 1601) repeatedly for 4 times, the case of improving reception gain at reception terminal for the corresponding data (signal/channel) is exemplified.

That is, by transmitting the same data (or signal/channel) repeatedly for several times as shown in FIG. 16, a UE may aggregate the data which are repeatedly received, and owing to this, successful data transmission of UE located in a shaded area is available.

Here, an example of the single data (or signal/channel) may be correspond to random access preamble, random access response, paging message, (E)PDCCH, PUSCH, PDSCH, and so on.

The CE level may be defined by whether the UE/eNB is required to perform repetition for transmitting a certain single data (or signal/channel) (1601) for successful UL/DL transmission/reception.

For example, CE level 0 may indicate the repetition is not needed, and CE level 1 may indicate the repetition is needed.

Alternatively, the CE level may be defined by the (maximum) number of times of repetition (or the (maximum) amount of repetition, for example, resource blocks, subframes) for transmitting a certain single data (or signal/channel) (1601) required for successful UL/DL transmission/reception.

For example, CE level 0 indicates that the repetition is not needed, CE level 1 indicates that the repetition is needed by some number of times (or some amount), CE level 2 indicates that the repetition is needed by more number of times (or more amount) than that needed for CE level 1, and so on.

The number of times of repetition (or repetition amount) for transmitting a single data (or signal/channel) according to the CE level may be determined for each eNB.

The CE level may be predefined by N levels. And number of times of repetition (or repetition amount) of the single data (or signal/channel) (1601) may be determined (or predefined) for each CE level.

Alternatively, maximum number of times of repetition (or maximum amount of repetition) of the single data (or signal/channel) (1601) may be determined (or predefined) for each CE level. In this case, the eNB may determine actual number of times of repetition (or amount of repetition) within maximum number of times of repetition (or maximum amount of repetition).

Here, a decibel (dB) may be used as a unit of CE level (e.g., 0dB, 6dB, 12dB, 18dB, etc).

For example, if the coverage enhancement is defined by 4 CE levels including 0dB, 6dB, 12dB and 18dB, the single data (or signal/channel) may be transmitted once in case of CE level 0dB (i.e., no repetition), the single data (or signal/channel) may be transmitted repeatedly by some number of times (or some amount) in case of CE level 6dB, the single data (or signal/channel) may be transmitted repeatedly by more number of times (or more amount) than that needed for CE level 6dB in case of CE level 12dB, and the single data (or signal/channel) may be transmitted repeatedly by more number of times (or more amount) than that needed for CE level 12dB in case of CE level 18dB.

In case that a UE requires the coverage enhancement, an eNB should be aware of this and transmit downlink data (or signal/channel) which is fit to the CE level that the UE requires.

Like the example above, if the coverage enhancement is defined as 4 levels of 0dB, 6dB, 12dB and 18dB, it is the most efficient that an eNB transmits downlink data in a format (i.e., repetition count (or repetition amount) that corresponds to the CE level of UE) corresponding to the coverage enhancement that a UE requires.

For example, in case of transmitting downlink data by applying the coverage enhancement such as 6dB, 12dB, 18dB, etc. to a UE that does not require the coverage enhancement (that is, the case that CE level is 0dB in the above example), an eNB should use more radio resources due to the repeated transmission. In addition, inefficient power consumption for UE is anticipated due to repeated reception of unnecessary downlink data and decoding.

On the other hand, in case of transmitting downlink data in the format (i.e., less repetition count, e.g., in case that an eNB transmits data with 0dB or 6dB but the coverage enhancement is 12dB) which is lower than the CE level of UE, transmission failure to the UE is anticipated.

Especially, since the paging procedure is an operation performed in an idle mode by a UE, an eNB simply forwards S1AP paging message which is received from an MME to a UE. Accordingly, the eNB is unable to transmit by considering physical properties of individual UE.

Through the subscriber information (e.g., the subscription information stored in HLR/HSS) of UE, whether the corresponding UE is Rel-13 low complexity UE (e.g., MTC UE, etc.) may be notified to an eNB when an MME transmits an S1AP paging message. However, since this information is static information, the eNB is unable to perceive whether the corresponding UE requires the coverage enhancement and an accurate CE level in real time. In this case, the eNB may transmit a RRC paging message by considering the coverage enhancement of the biggest CE level (i.e., transmitting the RRC paging message as many as the maximum repetition count), but this may cause unnecessary consumption of radio resources.

According to this, the present invention proposes a method for increasing paging reception efficiency of UE that supports the coverage enhancement (or the coverage enhancement is applied) and for decreasing unnecessary consumption of radio resources in an eNB.

More particularly, the present invention proposes a method for providing paging transmission count and/or CE level information of UE to an eNB by an MME during the paging procedure such that the eNB may transmit a RRC paging message according to the CE level of UE. In addition, the present invention proposes a method for transmitting paging to a UE according to the CE level which is determined based on the paging transmission count and/or CE level information received from an MME by an eNB.

Hereinafter, in the description of the present invention, the meaning of ramping-up a CE level may be interpreted as a meaning of increasing the CE level value itself, but also interpreted as meaning of increasing a repetition count of paging message according to the CE level in order to increase reception gain of paging in a UE, not the CE level value itself.

A method for determining an initial CE level value of UE

Each coverage enhancement level (CE level) and the related PRACH resource set (e.g., time resource, frequency resource and preamble; i.e., PRACH configuration) are provided in an SIB. In addition, PRACH repetition count and maximum preamble transmission trial count per CE level are provided in the SIB.

A UE may select the PRACH resources (e.g., time resource, frequency resource and preamble) that correspond to a CE level which is proper to its reception sensitivity (e.g., RSRP, etc.) by reading the SIB and PRACH resource information. That is, an initial CE level of UE is selected by the UE.

And the UE transmits the PRACH to an eNB by using the selected PRACH resource. According to this, the eNB may know the initial CE level of the corresponding UE from the PRACH configuration.

Later, if the UE is unable to receive a response to the PRACH that corresponds to the CE level of initially tried, the UE transmits PRACH in the next higher (or lower) CE level.

The UE in an identical CE level uses a random access resource related to the identical CE level. The time/frequency resource and repetition factor of the random access response message for the UE in the enhanced coverage is derived from the used PRACH resources.

Later, after the UE establishes connection to the eNB, the CE level of UE may be changed according to movement of UE, and the eNB may determine the CE level of UE by the change of CE level of UE. And the eNB may notify information such as a repetition count of data (or signal/channel) according to the CE level using DCI, and so on.

S1 release procedure

When a UE is switched from an IDLE (e.g., RRC_IDLE/ECM-IDLE) mode to a CONNECTED mode (e.g., RRC_CONNECTED/ECM-CONNECTED), the CE level value of UE may be transmitted to an MME during an S1 release procedure.

That is, in order to increase paging reception efficiency, an eNB may notify the CE level value of UE to an MME on the S1 release. For example, the eNB provides the CE level that a UE used most recently to the MME. And while the MME stores the CE level received from the eNB in the context information of UE, the MME may transmit an S1AP paging message (or paging request) for the corresponding UE with the stored CE level to the eNB. This will be described by reference to the drawing below.

FIG. 17 is a drawing exemplifying an S1 release procedure for determining a coverage enhancement level in a paging procedure according to an embodiment of the present invention.

The S1 release procedure according to the present invention includes both of eNB-initiated and MME-initiated S1 release procedures like the description according to FIG. 15. In addition, in describing the S1 release procedure, the parts which are different from the example of FIG. 15 will be mainly described for the convenience of description below.

Referring to FIG. 17, an eNB transmits a UE context release request message to an MME (through S1-AP protocol) (step, S1701).

The UE context release request message is a message transmitted by the eNB in order to request release of S1-logical connection which is UE-associated through the S1 interface.

As described above, the eNB may transmit a RRC connection release message to a UE in order to release signaling connection of UE before transmitting the UE context release request message to the MME or with the transmission. That is, step S1703 may be performed before or with step S1701.

In addition, as described above, step S1701 may be performed only in case that the eNB-initiated S1 release procedure is considered, and may not be performed in case that the MME-initiated S1 release procedure is performed.

The MME transmits a UE context release command message to the eNB (through S1-AP protocol).

The RRC connection is still not released (i.e., in case of not being performed before or with step S1701), the eNB may transmit a RRC connection release message to the UE (step, S1703).

The eNB transmits a UE context release complete message to the MME (through S1-AP protocol) in response to the UE context release command message (step, S1704).

The UE context release command message is a message which is transmitted by the eNB in order to confirm the release of UE-associated S1-logical connection through S1 interface.

Here, the UE context release complete message may include CE level information.

Or, the UE context release complete message may include CE level and cell ID (e.g., ECGI). That is, the eNB may forward the CE level to the MME for each cell.

For example, in case that the eNB or the MME starts the S1 release procedure, the CE level of UE may be transmitted with being included in the S1-AP UE context release complete message (i.e., step S1704).

For another example, in case that the eNB starts the S1 release procedure, the CE level of UE may also be transmitted with being included in the S1-AP UE context release request message (i.e., step S1701) to the MME.

Here, since the CE level of UE may be continuously changed in a CONNECTED mode of UE, the CE level which is transmitted to the MME may be corresponded to the CE level which is used most recently before the S1 release procedure. This may be interpreted to the CE level which is lastly used in the CONNECTED mode of UE or most recently used before being switched from the CONNECTED mode to the IDLE mode. In addition, in case that UE/eNB transmits uplink/downlink data using a specific CE level and is unable to receive the response to it, the UE/eNB retransmits the uplink/downlink data by ramping CE level. Accordingly, the CE level may be interpreted as the CE level of being successfully used most recently.

That is, the eNB may forward the CE level of UE to the MME when performing an S1 release procedure, and the MME may notify this again so as to use the corresponding CE level (i.e., the CE level which is received when performing S1 release) in the eNB when paging for the corresponding UE. In addition, in case that the UE context release complete message (or the UE context release request message) includes a cell ID (e.g., ECGI) together with the CE level, the MME may forward the CE level to the eNB when transmitting paging to the corresponding cell by storing the cell ID (e.g., ECGI).

Table 7 exemplifies the UE context release request message.

[Table 7]

| IE/Group Name | Presence | Range | IE type and reference | Semantics description | Criticality | Assigned Criticality |
|---|---|---|---|---|---|---|
| Message Type | M | | 9.2.1.1 | | YES | ignore |
| MME UE S1AP ID | M | | 9.2.3.3 | | YES | reject |
| eNB UE S1AP ID | M | | 9.2.3.4 | | YES | reject |
| Cause | M | | 9.2.1.3 | | YES | ignore |

(continued)

| IE/Group Name | Presence | Range | IE type and reference | Semantics description | Criticality | Assigned Criticality |
|---|---|---|---|---|---|---|
| GW Context Release Indication | O | | 9.2.1.8 4 | | YES | reject |
| UE Coverage Enhancement level | O | | 9.2.1.X X | | YES | Ignore |

Referring to Table 7, the Message Type IE uniquely identifies a message which is transmitted.

The MME UE S1AP ID IE identifies a UE association through S1 interface in the MME.

The eNB UE S1AP ID IE identifies a UE association through S1 interface in the eNB.

The cause IE indicates a cause of a specific event for S1AP protocol. That is, the cause IE indicates a cause of transmitting a UE context release request message.

The GW context release Indication IE is set by the eNB in order to provide an instruction of which resources related to S1 UE context where the MME is signaled is to be released.

The UE coverage enhancement level IE indicates a CE level of UE.

In case that the UE coverage enhancement level IE is included in a UE context release request message, this may correspond to the CE level which is used most recently before the S1 release procedure.

Table. 8 exemplifies the UE coverage enhancement level IE.

[Table 8]

| IE/Group Name | Presence | Range | IE type and reference | Semantics description |
|---|---|---|---|---|
| UE Coverage Enhancement level | M | | ENUMERATED (CE levell, CElevel2, CElevel3... | |

Referring to Table 8, the UE coverage enhancement level IE indicates a CE level of UE.

The UE coverage enhancement level IE may include ENUMERATED type (CElevel1, CElevel2, CElevel3, etc.). And the UE coverage enhancement level IE may indicate any one of N CE levels which are predefined (or preconfigured). For example, the UE coverage enhancement level IE may indicates one of CElevel1, CElevel2, CElevel3, and so on.

Table 9 exemplifies a UE context release complete message.

[Table 9]

| IE/Group Name | Presence | Range | IE type and reference | Semantics description | Criticality | Assigned Criticality |
|---|---|---|---|---|---|---|
| Message Type | M | | 9.2.1.1 | | YES | reject |
| MME UE S1AP ID | M | | 9.2.3.3 | | YES | ignore |
| eNB UE S1AP ID | M | | 9.2.3.4 | | YES | ignore |
| Criticality Diagnostics | O | | 9.2.1.2 1 | | YES | ignore |
| User Location Information | O | | 9.2.1.9 3 | | YES | ignore |
| UE Coverage Enhancement level | O | | 9.2.1.X X | | YES | ignore |

The description of the Message Type IE, the MME UE S1AP ID IE and the eNB UE S1AP ID IE in Table 9 will be omitted since they are the same as those of Table 7.

Referring to Table 9, in case that a part of the received message is not comprehended or lost, or in case that the message includes a logical error, the Criticality Diagnostics IE is transmitted by the eNB or the MME. When this IE is applied, this IE includes information on which IE is not comprehended or lost.

The User Location Information IE provides location information of UE.

The UE coverage enhancement level IE indicates a CE level of UE.

In case that the UE coverage enhancement level IE is included in the UE context release complete message, this may correspond to the CE level which is used most recently before the S1 release procedure.

In this time, the UE coverage enhancement level IE may indicate any one of N CE levels which are predefined (or preconfigured) similar to those of Table 8 above.

Meanwhile, the MME may store the CE level which is received through a UE context release complete message (or a UE context release request message) from the eNB, and use the CE level for the next paging. At the moment, the MME may check forwarding the CE level when transmitting paging to the corresponding cell by storing a cell identity (e.g., ECGI) when storing the CE level in UE context information.

Paging method

An MME stores a CE level which is received from an eNB through the S1 release procedure described above in context information of UE. And the MME may transmit a S1AP paging message with a paging count and/or a CE level being included in order to increase transmission efficiency of paging when transmitting the S1AP paging message for the corresponding UE. This will be described by reference to the drawing below.

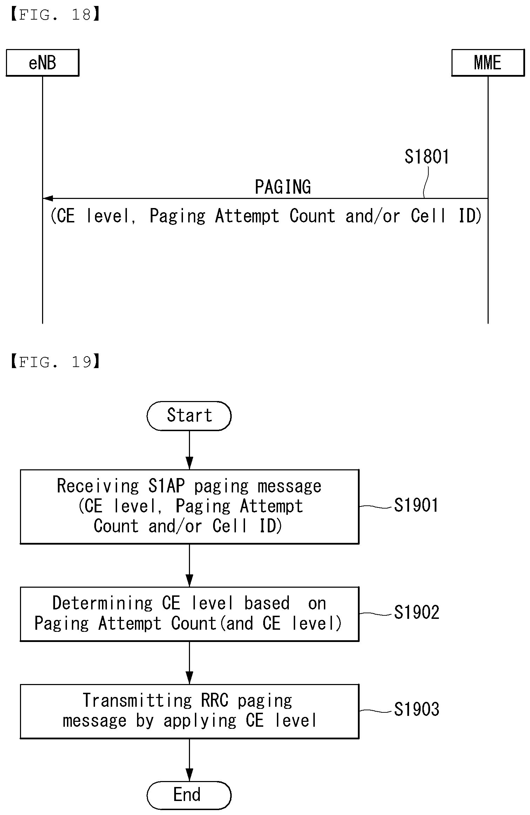

FIG. 18 is a diagram exemplifying a paging transmission method according to an embodiment of the present invention.

Referring to FIG. 18, an MME transmits a S1AP paging message (or paging request) to an eNB (step, S1801).

Here, the S1AP paging message (or paging request) may include a CE level of UE, paging transmission count (or paging attempt count) and/or a cell identity (cell ID; e.g., ECGI, etc.).

1) According to an embodiment of the present invention, the S1AP paging message (or paging request) may include a CE level. That is, the S1AP paging message (or paging request) indicates a CE level that an eNB should apply when the MME transmits paging to the eNB.

At the moment, when retransmitting paging, the MME may retransmit a CE level by ramping-up the previous CE level. That is, when retransmitting paging, the MME may retransmit the S1AP paging message (or paging request) with a higher CE level than the CE level included in the previous paging message (or paging request) being included.

For example, when transmitting the second S1AP paging message (or paging request) to the same UE, the MME may transmit an S1AP paging message (or paging request) with a CE level by ramping-up the CE level which is transmitted with an initial S1AP paging message (or paging request) to the eNB. In addition, similarly, when transmitting the third S1AP paging message (or paging request) to the same UE, the MME may transmit an S1AP paging message (or paging request) with a CE level by ramping-up the CE level which is transmitted with the second S1AP paging message (or paging request) to the eNB.

That is, since whether the paging is retransmitted can be determined at the MME, a method of transmitting a CE level by ramping-up the previous value by the MME may be used when retransmitting paging.

At the moment, while the MME stores the CE level which is received from the eNB in context information of UE, the MME may transmit a S1AP paging message with the CE level being included when transmitting paging of the corresponding UE. And when retransmitting paging, the already stored CE level may be used as a default value and also used by ramping-up the default CE level. That is, the CE level included in the S1AP paging message may be a CE level received (through S1 UE Context Release Complete during an S1 release procedure) from the last eNB to which the UE was connected. In other words, the MME may store a CE level which is received from the eNB during the S1 release procedure for a specific UE, and transmit an initial S1AP paging message (or paging request) with the stored CE level being included for the corresponding UE. And when retransmitting the S1AP paging message (or paging request) for the corresponding UE, as described above, the MME may transmit the S1AP paging message with a CE level by ramping-up the previous CE level.

On the other hand, in case that the eNB does not provide a CE level to the MME, the CE level may be started from a predetermined CE level value (e.g., one of the lowest CE level value, the highest CE level value, medium value or an average value). That is, when transmitting an initial S1AP paging message to a specific UE, in case that total N CE levels are predefined (or preconfigured), the MME may transmit the predetermined CE level with being included in the S1AP paging message. And when retransmitting the S1AP paging message to the corresponding UE, the MME may transmit the S1AP paging message with the CE level by ramping-up the previous CE level being included.

Meanwhile, the MME may transmit the S1AP paging message with the CE level being included only in case of transmitting paging to the eNB (or cell) that provides the CE level of the corresponding UE.

Table 10 exemplifies an S1AP paging message according to an embodiment of the present invention.

[Table 10]

| IE/Group Name | Presence | Range | IE type and reference | Semantics description | Criticality | Assigned Criticality |
|---|---|---|---|---|---|---|
| Message Type | M | | 9.2.1.1 | | YES | ignore |
| UE Identity Index value | M | | 9.2.3.1 0 | | YES | ignore |
| UE Paging Identity | M | | 9.2.3.1 3 | | YES | ignore |
| Paging DRX | O | | 9.2.1.1 6 | | YES | ignore |
| CN Domain | M | | 9.2.3.2 2 | | YES | ignore |
| List of TAIs | | 1 | | | YES | ignore |
| >TAI List Item | | 1 .. <maxnoof TAIs> | | | EACH | ignore |
| >>TAI | M | | 9.2.3.1 6 | | - | |
| CSG Id List | | 0..1 | | | GLOBAL | ignore |
| >CSG Id | | 1 .. <maxnoof CSGId> | 9.2.1.6 2 | | - | |
| Paging Priority | O | | 9.2.1.7 8 | | YES | ignore |
| UE Radio Capability for Paging | O | | 9.2.1.9 8 | | YES | ignore |
| UE Coverage Enhancement level | O | | 9.2.1.X X | | YES | ignore |

In describing Table 10, the parts different from those of Table 2 above will be mainly described, and description for the same parts will be omitted.

Referring to Table 10, the S1AP paging message may include the UE coverage enhancement level IE. Or, the UE coverage enhancement level IE may also be included in the UE Radio Capability for Paging IE.

Table 11 exemplifies the UE coverage enhancement level IE according to an embodiment of the present invention.

[Table 11]

| IE/Group Name | Presence | Range | IE type and reference | Semantics description |
|---|---|---|---|---|
| UE Coverage Enhancement level | M | | ENUMERATED (CE level1, CElevel2, CElevel3... | |

Referring to Table 11, the UE coverage enhancement level IE may indicate UE coverage enhancement levels (e.g., CElevel1, CElevel2, CElevel3, etc.) for paging by an eNB.

2) According to another embodiment of the present invention, an S1AP paging message (or paging request) may include paging transmission count (or paging attempt count; e.g., 1, 2, 3, etc.). That is, when an MME transmits the S1AP paging message to an eNB, the MME may indicate a transmission count of the S1AP paging message (i.e., paging trial or attempt count for the same paging).

For example, when the MME transmits an initial S1AP paging message to a specific UE, the MME indicate '1' as the paging attempt count (or paging transmission count) included in the S1AP paging message. And when the MME transmits the second S1AP paging message to the corresponding UE, the MME may indicate '2' as the paging attempt count (or paging transmission count) included in the S1AP paging message.

Table 12 exemplifies an S1AP paging message according to an embodiment of the present invention.

[Table 12]

| IE/Group Name | Presence | Range | IE type and reference | Semantics description | Criticality | Assigned Criticality |
|---|---|---|---|---|---|---|
| Message Type | M | | 9.2.1.1 | | YES | ignore |
| UE Identity Index value | M | | 9.2.3.1 0 | | YES | ignore |
| UE Paging Identity | M | | 9.2.3.1 3 | | YES | ignore |
| Paging DRX | O | | 9.2.1.1 6 | | YES | ignore |
| CN Domain | M | | 9.2.3.2 2 | | YES | ignore |
| List of TAIs | | 1 | | | YES | ignore |
| >TAI List Item | | 1 .. <maxnoof TAIs> | | | EACH | ignore |
| >>TAI | M | | 9.2.3.1 6 | | - | |
| CSG Id List | | 0..1 | | | GLOBAL | ignore |
| >CSG Id | | 1 .. <maxnoof CSGId> | 9.2.1.6 2 | | - | |
| Paging Priority | O | | 9.2.1.7 8 | | YES | ignore |
| UE Radio Capability for Paging | O | | 9.2.1.9 8 | | YES | ignore |
| Paging Count | O | | 9.2.1.X X | | YES | ignore |

In describing Table 12, the parts different from those of Table 2 above will be mainly described, and description for the same parts will be omitted.

Referring to Table 12, the S1AP paging message may include a paging count (or paging attempt count) IE.

Table 13 exemplifies the paging count IE according to an embodiment of the present invention.

[Table 13]

| IE/Group Name | Presence | Range | IE type and reference | Semantics description |
|---|---|---|---|---|
| Paging count | M | | ENUMERATED (0, 1,2,3... | |

Referring to Table 13, the paging count IE indicates count (0, 1, 2, 3, etc.) of paging retransmission trial (or attempt).

3) The same paging policy (i.e., repetition for transmitting paging) is applied to all UEs may be very inefficient in terms of paging reception efficiency and paging resource since each UE may have a different CE level. Particularly, in case of UE originated call, the UE can inform the appropriate CE level according to RSRP measured by the UE to the eNB, and the eNB can select the appropriate RACH procedure and perform the selected RACH procedure. However, in case of UE terminated call, the eNB cannot transmit the paging using the optimized CE level since the eNB doesn't know the appropriate CE level of the corresponding UE. Thus, the eNB informs the CE level of the UE to the MME in S1 release procedure and MME informs back the CE level of the UE to the eNB in paging procedure, so the eNB can transmit the paging using the appropriate CE level.

However, the UE may move in IDLE duration, so the CE level may vary due to the mobility of the UE. Here, since the change of the CE level is not informed to the MME, MME may transmit the S1AP paging message including the CE level before changing to the eNB. Thus, the eNB transmits the RRC paging message using inappropriate CE level to the UE. In this case, if the UE moves the area which is required higher CE level due to the mobility of UE, paging failure may occur owing to lower paging repetition. If the eNB doesn't manage the history for transmitting the paging for each UE, the eNB cannot be aware of whether paging retransmission is required. Finally, the eNB cannot perform appropriate action (e.g., retransmission RRC paging message using higher CE level), and the paging failure may occur repeatedly.

Thus, the MME may inform the paging attempt count to the eNB, so that the eNB can determine whether the CE level of the corresponding UE is appropriate. Further, the eNB can determine whether to ramp up the CE level of the corresponding UE autonomously (i.e., ramping up the CE level according to higher paging attempt count), the possibility of paging failure can be decreased.

Therefore, according to another embodiment of the present invention, an S1AP paging message (or paging request) may include a paging attempt count (or paging transmission count) together with a CE level. That is, embodiment 1) and embodiment 2) described above may be applied together.

- An MME may indicate the same CE level in an S1AP paging message (or paging request) regardless of an initial paging transmission or a paging retransmission. And the S1AP paging message (or paging request) may include a paging transmission count (or paging attempt count; e.g., 1, 2, 3, etc.).

  At the moment, while the MME stores the CE level which is received from the eNB in context information of UE, the MME may transmit a S1AP paging message with the CE level being included when transmitting paging of the corresponding UE. That is, the MME may store a CE level which is received from the eNB during the S1 release procedure for a specific UE, and transmit the S1AP paging message (or paging request) with the stored CE level being included for the corresponding UE. In other words, the CE level included in the S1AP paging message may be a CE level received (through S1 UE Context Release Complete during an S1 release procedure) from the last eNB to which the UE was connected.

  On the other hand, in case that the eNB does not provide a CE level to the MME, the CE level may correspond to a value which is determined by the MME (e.g., in case that total N CE levels are predefined (or preconfigured), one of medium value, an average value, the lowest CE level value or the highest CE level value of N CE levels which are predefined (or preconfigured)). That is, when transmitting an S1AP paging message to a specific UE, the MME may transmit the S1AP paging message with the CE level which is determined by the MME.

- When retransmitting paging, the MME may retransmit a CE level by ramping-up the previous CE level. That is, when transmitting an initial S1AP paging message, the MME transmit, the MME may transmit the initial S1AP paging message with an initial CE level. Later, when retransmitting the S1AP paging message to the same UE, the MME may transmit the S1AP paging message with a CE level by ramping-up the initial CE level. And the S1AP paging message (or paging request) may include a paging transmission count (or paging attempt count; e.g., 1, 2, 3, etc.).

At the moment, while the MME stores the CE level which is received from the eNB in context information of UE, the MME may transmit a S1AP paging message with the CE level being included when transmitting paging of the corresponding UE. And when retransmitting paging, the already stored CE level may be used as a default value and also used by ramping-up the default CE level. In other words, the MME may store a CE level which is received from the eNB during the S1 release procedure for a specific UE, and transmit an initial S1AP paging message (or paging request) with the stored CE level being included for the corresponding UE. And when retransmitting the S1AP paging message (or paging request) for the corresponding UE, as described above, the MME may transmit a ramping-up the previous CE level.

On the other hand, in case that the eNB does not provide a CE level to the MME, the CE level may be started from a value (e.g., in case that total N CE levels are predefined (or preconfigured), one of medium value, an average value, the lowest CE level value or the highest CE level value of N CE levels which are predefined (or preconfigured)) which is determined by the MME. That is, when transmitting an initial S1AP paging message to a specific UE, in case that total N CE levels are predefined (or preconfigured), the MME may transmit the S1AP paging message with the CE level which is determined by the MME. And when retransmitting the S1AP paging message to the corresponding UE, the MME may transmit the S1AP paging message with the CE level by ramping-up the previous CE level being included.

Meanwhile, as described above, the MME may transmit the S1AP paging message with the CE level being included only in case of transmitting paging to the eNB (or cell) that provides the CE level of the corresponding UE. That is, when performing S1 release, only paging transmission count (or paging attempt count) without CE level may be transmitted to an eNB except the eNB that provides the CE level of the corresponding UE.

Table 14 exemplifies an S1AP paging message according to an embodiment of the present invention.

[Table 14]

| IE/Group Name | Presence | Range | IE type and reference | Semantics description | Criticality | Assigned Criticality |
|---|---|---|---|---|---|---|
| Message Type | M | | 9.2.1.1 | | YES | ignore |
| UE Identity Index value | M | | 9.2.3.1 0 | | YES | ignore |
| UE Paging Identity | M | | 9.2.3.1 3 | | YES | ignore |
| Paging DRX | O | | 9.2.1.1 6 | | YES | ignore |
| CN Domain | M | | 9.2.3.2 2 | | YES | ignore |
| List of TAIs | | 1 | | | YES | ignore |
| >TAI List Item | | 1.. <maxnoof TAIs> | | | EACH | ignore |
| >>TAI | M | | 9.2.3.1 6 | | - | |
| CSG Id List | | 0..1 | | | GLOBAL | ignore |
| >CSG Id | | 1.. <maxnoof CSGId> | 9.2.1.6 2 | | - | |
| Paging Priority | O | | 9.2.1.7 8 | | YES | ignore |
| UE Radio Capability for Paging | O | | 9.2.1.9 8 | | YES | ignore |
| UE Coverage Enhancement level | O | | 9.2.1.X X | | YES | ignore |
| Paging Count | O | | 9.2.1.X X | | YES | ignore |

In describing Table 14, the parts different from those of Table 2 above will be mainly described, and description for the same parts will be omitted.

Referring to Table 14, the S1AP paging message may include the UE coverage enhancement level IE and the paging count (or paging attempt count) IE. Or, the UE coverage enhancement level IE may be included in the UE radio capability for Paging IE.

Table 15 exemplifies the UE coverage enhancement level IE according to an embodiment of the present invention.

[Table 15]

| IE/Group Name | Presence | Range | IE type and reference | Semantics description |
|---|---|---|---|---|
| UE Coverage Enhancement level | M | | ENUMERATED (CE level1, CElevel2, CElevel3... | |

Referring to Table 15, the UE coverage enhancement level IE may indicate a UE coverage enhancement level (CE level; e.g., CElevel1, CElevel2, CElevel3, etc.) for paging by an eNB.

Table 16 exemplifies the paging count IE according to an embodiment of the present invention.

[Table 16]

| IE/Group Name | Presence | Range | IE type and reference | Semantics description |
|---|---|---|---|---|
| Paging count | M | | ENUMERATED (0, 1,2,3... | |

Referring to Table 16, the paging count IE indicates a paging trial (or attempt) count (0, 1, 2, 3, etc.).

4) According to another embodiment of the present invention, in case that an MME firstly transmits a paging message, the MME may transmit the paging message with an indication of the first transmission together with a CE level. And from the subsequent second transmission, the MME may transmit the paging message with only paging transmission count (e.g., the second, the third, etc.).

That is, the first S1AP paging message (or paging request) may include the paging transmission count (or paging attempt count) together with the CE level, but the retransmitted S1AP paging message (or paging request) may include only the paging transmission count (or paging attempt count).

At the moment, while the MME stores the CE level which is received from an eNB in context information of a UE, then the MME may transmit an initial S1AP paging message with the CE level being included when transmitting the paging of the corresponding UE. That is, an MME may store a CE level received from an eNB during an S1 release procedure for a specific UE, then transmit an initial S1AP paging message (or paging request) for the corresponding UE with the stored CE level being included.

On the other hand, in case that the eNB does not provide a CE level to the MME, the CE level may correspond to a value (e.g., in case that total N CE levels are predefined (or preconfigured), one of medium value, an average value, the lowest CE level value or the highest CE level value of N CE levels which are predefined (or preconfigured)) which is determined by the MME. That is, when transmitting an initial S1AP paging message to a specific UE, the MME may transmit an initial S1AP paging message with the CE level which is determined by the MME.

Meanwhile, as described above, the MME may transmit the S1AP paging message with the CE level being included only in case of transmitting paging to the eNB (or cell) that provides the CE level of the corresponding UE. That is, when performing S1 release, only paging transmission count (or paging attempt count) without CE level may be transmitted to an eNB except the eNB that provides the CE level of the corresponding UE.

In case of this embodiment, an initial S1AP paging message may be configured as Table 14, and the S1AP paging message which is retransmitted later may be configured as Table 12.

5) According to another embodiment of the present invention, together with any one of embodiments described in items 1) to 4) above, an S1AP paging message (or paging request) may include a cell identity (e.g., ECGI, etc.). That is, an MME may transmit the S1AP paging message with a cell identity (e.g., ECGI, etc.) to which the CE level of a corresponding UE to an eNB.

FIG. 19 is a diagram exemplifying a paging transmission method according to an embodiment of the present invention.

Referring to FIG. 19, an eNB receives an S1AP paging message (or paging request) from an MME (step, S1901).

Here, the S1AP paging message (or paging request) may include a CE level of UE, paging transmission count (or paging attempt count) and/or a cell identity (e.g., ECGI, etc.).

The eNB determines a CE level of the corresponding UE based on the paging transmission count (or paging attempt count) and/or the CE level of UE (step, S1902).

And the eNB transmits a RRC paging message (or paging information) to the corresponding UE by applying the CE level which is determined (step, S1903).

That is, the eNB setup the RRC paging message (refer to Table 3 above), transmits a DCI to which a CRC which is scrambled by P-RNTI in a PDCCH, and transmits the RRC paging message to the UE through a PDSCH which is indicated by the PDCCH. That is, the eNB transmits the RRC paging message through a PCCH logical channel, a PCH transmission channel and a PDSCH physical channel.

In addition, the eNB may transmit the RRC paging message to the corresponding UE on a paging occasion of the corresponding paged UE which is determined by using IMSI and DRX values of the paged UE.

Hereinafter, a method for determining a CE level of UE by an eNB will be described in conjunction with embodiments 1) to 5) described by reference to FIG. 18.

1) In connection with embodiment 1) of FIG. 18, in case that a S1AP paging message (or paging request) includes a CE level, an eNB determines a CE level for the corresponding UE based on a CE level which is included in the S1AP paging message (or paging request). That is, the eNB transmits a RRC paging message to the UE by applying the CE level which is received from an MME.

Meanwhile, in case that the eNB receives a CE level which is higher than the CE level that the eNB is available to service, the eNB may apply its maximum CE level.

2) In connection with embodiment 2) of FIG. 18, in case that an S1AP paging message (or paging request) includes paging transmission count (or paging attempt count; e.g., 1, 2, 3, etc.), an eNB determines a CE level based on the paging transmission count (or paging attempt count) included in the S1AP paging message.

In this case, when the eNB transmits a RRC paging message (or paging information) to a UE using the received paging transmission count (or paging attempt count), the eNB may apply a CE level to the corresponding UE for paging in various ways. At the moment, in case that the S1AP paging message is transmitted with only the paging attempt count (or paging transmission count) without a CE level, an initial CE level may be determined for each eNB. Or, each of the eNB may individually determine an initial CE level for paging to each cell that the eNB serves.

For example, in case that total N CE levels are predefined (or preconfigured), the eNB may determine a CE level as one of medium value, an average value or the lowest value among N CE levels which are predefined (or preconfigured).

In addition, the eNB may determine an initial CE level based on (considering) paging resources and/or a number of UE (i.e., paging queue) to which the RRC paging message is transmitted, and so on.

To be more specific, as described above, a paging occasion may be determined for each UE by using IMSI and DRX values of the UE. And the eNB may transmit the RRC paging message to the corresponding UE on a paging occasion of the paged UE. However, as shown in Table 3 above, the maximum number (i.e., the maximum number or paging resource of UE that is available to be paged) of a paging record that may be included in a single RRC paging message that the eNB transmits may be predefined. For example, in current LTE/LTE-A system, the maximum number of a paging record that may be included in a single RRC paging message is defined as 16 ('maxPageRec' = 16). Accordingly, if the number of UE which is required to transmit paging on a specific paging occasion exceeds the maximum number, a case may be occurred that the eNB is unable to transmit paging on the corresponding paging occasion to all UEs that are paged. In this case, paging of a specific UE may be transmitted on the next paging occasion of the corresponding UE. Accordingly, the eNB that receives an S1AP paging message from an MME may determine an initial CE level for paging based on paging resources and/or a number of UE to which paging will be transmitted, and so on. And the eNB transmits a RRC paging message on the paging occasion of the corresponding UE by applying the initial CE level which is determined by the eNB.

And the eNB may determine a CE level for paging by ramping-up the initial CE level depending on the paging attempt count (or paging transmission count) included in the S1AP paging message. For example, if the paging attempt count (or paging transmission count) is 2, the eNB may determine a CE level by ramping-up the initial CE level by one step.

3) In connection with embodiment 3) of FIG. 18 above, in case that an S1AP paging message (or paging request) includes paging attempt count (or paging transmission count) together with a CE level, an eNB may determine a CE level (i.e., repetition count for transmitting the RRC paging message) based on the CE level included in the S1AP paging message (or paging request) and/or the paging attempt count (or paging transmission count). In this case, the eNB may determine whether to ramp up the CE level applied to the UE or how much ramping up the CE level applied to the UE according to the paging attempt count (or paging transmission count) based on the CE level value received through the S1AP paging message.

- As described above, when transmitting an initial paging or regardless of paging retransmission, an S1AP paging message (or paging request) may indicate the same CE level, and an S1AP paging message (or paging request) may include the paging attempt count (or paging transmission count; e.g., 1, 2, 3, etc.).

In this case, in case that the eNB receives an S1AP paging message of which the paging attempt count (or paging transmission count) is 1 from an MME, the eNB may transmit a RRC paging message to a UE by applying a CE level included in the S1AP paging message. In case that the eNB receives an S1AP paging message of which the paging attempt count (or paging transmission count) is 2 from an MME, the eNB may transmit a RRC paging message to a UE by applying a CE level by ramping-up (for example, by one step) the CE level included in the corresponding S1AP paging message.

For example, it is assumed that the (maximum) number of times of repetition (or the (maximum) amount of repetition) of RRC paging message corresponding to the CE level 0 (e.g., 0dB), CE level 1 (e.g., 6dB), CE level 2 (e.g., 12dB) and CE level 3 (e.g., 18dB) are 1, 2, 3 and 4 times (or resource blocks, subframes) respectively.

In this case, if the S1AP paging message includes CE level 1 and the paging attempt count 2, the eNB may transmit the RRC paging message to the corresponding UE at (maximum) 3 times (or (maximum) 3 resource blocks or (maximum) 3 subframes) corresponding to CE level 2 (ramping up the CE level 1 by one step) repeatedly.

Alternatively, the eNB may transmit the RRC paging message to the corresponding UE at (maximum) 2 times (or (maximum) 2 resource blocks or (maximum) 2 subframes) corresponding to the received CE level 1 repeatedly regardless the paging attempt count.

Similarly, in case that the eNB receives an S1AP paging message of which the paging attempt count (or paging transmission count) is 3 from an MME, the eNB may transmit a RRC paging message to a UE by applying a CE level by ramping-up (for example, by two steps) the CE level included in the corresponding S1AP paging message.

In the above example, if the S1AP paging message includes CE level 1 and the paging attempt count 3, the eNB may transmit the RRC paging message to the corresponding UE at (maximum) 4 times (or (maximum) 4 resource blocks, (maximum) 4 subframes) corresponding to CE level 3 repeatedly.

Alternatively, the eNB may transmit the RRC paging message to the corresponding UE at (maximum) 2 times (or (maximum) 2 resource blocks, (maximum) 2 subframes) corresponding to the received CE level 1 repeatedly regardless the paging attempt count.- On the other hand, when an MME retransmits paging, the MME may retransmit a CE level by ramping-up the previous CE level. That is, when transmitting an initial S1AP paging message, an MME may transmit the initial S1AP paging message with an initial CE level, and when retransmitting the S1AP paging message to the same UE, the MME may transmit the S1AP paging message with a CE level by ramping-up the initial CE level. And the S1AP paging message (or paging request) may include paging attempt count (or paging transmission count; e.g., 1, 2, 3, etc.).

In this case, the eNB may transmit a RRC paging message (or paging information) by applying the CE level received from the MME.

Meanwhile, in case that the eNB receives a CE level which is higher than the CE level that the eNB is available to service, the eNB may apply its maximum CE level.

4) In connection with embodiment 4) of FIG. 18 above, an initial S1AP paging message (or paging request) includes paging transmission count (or paging attempt count; e.g., 1, 2, 3, etc.) together with a CE level, but a retransmitted S1AP paging message (or paging request) may include only the paging transmission count (or paging attempt count). In this case, in case that the eNB receives an S1AP paging message of which the paging transmission count (or paging attempt count) is 1 from an MME, the eNB may transmit a RRC paging message to a UE by applying a CE level included in the S1AP paging message.

And in case that the eNB receives an S1AP paging message of which the paging transmission count (or paging attempt count) is 2 from an MME, the eNB may transmit a RRC paging message to a UE by applying a CE level by ramping-up the CE level included in the corresponding S1AP paging message of which the paging transmission count (or paging attempt count) is 1 by one step. Similarly, in case that the eNB receives an S1AP paging message of which the paging transmission count (or paging attempt count) is 3 from an MME, the eNB may transmit a RRC paging message to a UE by applying a CE level by ramping-up the CE level included in the corresponding S1AP paging message of which the paging transmission count (or paging attempt count) is 1 by two steps.

Meanwhile, in case that the eNB receives a CE level which is higher than the CE level that the eNB is available to service, the eNB may apply its maximum CE level.

[00537] 5) In connection with embodiment 5) of FIG. 18 above, an S1AP paging message (or paging request) may include a cell identity (e.g., ECGI, etc.).

In this case, when an eNB transmits a RRC paging message to a cell that corresponds to a cell identity (e.g., ECGI, etc.) which is received through the S1AP paging message (or paging request), the eNB may determine a CE level based on the CE level and/or the paging transmission count (or paging attempt count) received from an MME.

Hereinafter, the paging procedure according to embodiments 1) to 4) described above will be described in more detail. In addition, for the convenience of description, it is assumed that an S1AP paging message included a cell identity (e.g., ECGI, etc.) similar to embodiment 5) above.

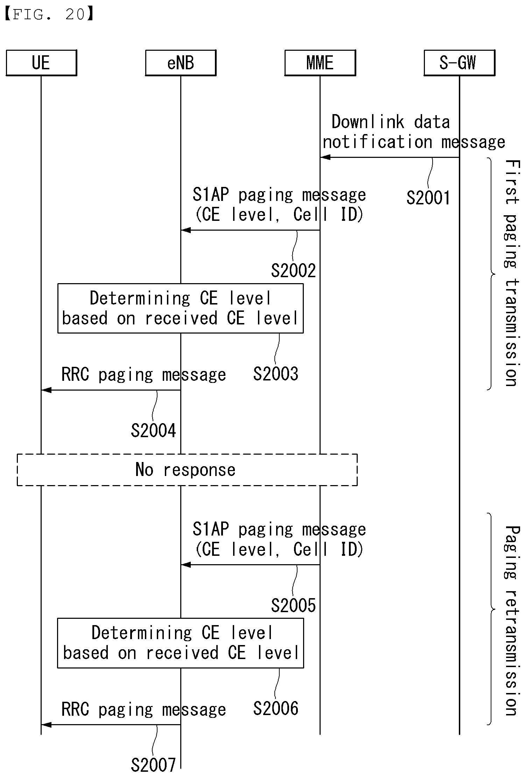

FIG. 20 is a diagram exemplifying a paging transmission method according to an embodiment of the present invention.

In FIG. 20, embodiment 1) described above will be exemplified in more detail.

Referring to FIG. 20, an S-GW transmits a downlink data notification message to an MME (step, S2001).

To be more specific, when downlink data arrives at a P-GW from an external network, the P-GW forwards the downlink data to the S-GW. In case that the downlink data is unable to be transmitted to an eNB since a downlink S1 bearer is released, the S-GW transmits the downlink data notification message to the MME to which a UE is registered for a signaling connection and a bearer configuration of the corresponding UE.

The MME transmits an S1AP paging message to the eNB which is belonged to a tracking area where the UE is registered most recently (step, S2002).

Here, the S1AP paging message may include, for example, a CE level and a cell ID (e.g., ECGI) of the corresponding UE.

At the moment, in case that the MME receives a CE level received from the eNB during an S1 release procedure for the corresponding UE and store the CE level in UE context information, the MME may transmit the S1AP paging message with the CE level being included.

On the other hand, in case that the eNB does not provide a CE level to the MME, the CE level may correspond to a value which is determined by the MME (e.g., in case that total N CE levels are predefined (or preconfigured), one of medium value, an average value, the lowest CE level value or the highest CE level value of N CE levels which are predefined (or preconfigured).

The eNB that receives the S1AP paging message determines a CE level of the corresponding UE based on the received CE level (step, S2003).

At the moment, the eNB may determine the CE level received from the MME as it is to be a CE level of the corresponding UE.

And the eNB transmits a RRC paging message (or paging information) to the corresponding UE by applying the CE level determined in step, S2003 (step, S2004).

Later, if there is no response to the paging from the corresponding UE for a predetermined time, the MME retransmits the S1AP paging message to the eNB (step, S2005).

Here, the S1AP paging message may include a CE level and a cell ID (e.g., ECGI) of the corresponding UE.

Here, a CE level in the second paging message may be a CE level which is ramping-up the CE level in the initial S1AP paging message (i.e., step S2002).

The eNB that receives the S1AP paging message determines a CE level of the corresponding UE based on the received CE level (step, S2006).

At the moment, the eNB may determine the CE level received from the MME as it is to be a CE level of the corresponding UE.

And the eNB transmits a RRC paging message (or paging information) to the corresponding UE by applying the CE level determined in step, S2006 (step, S2007).

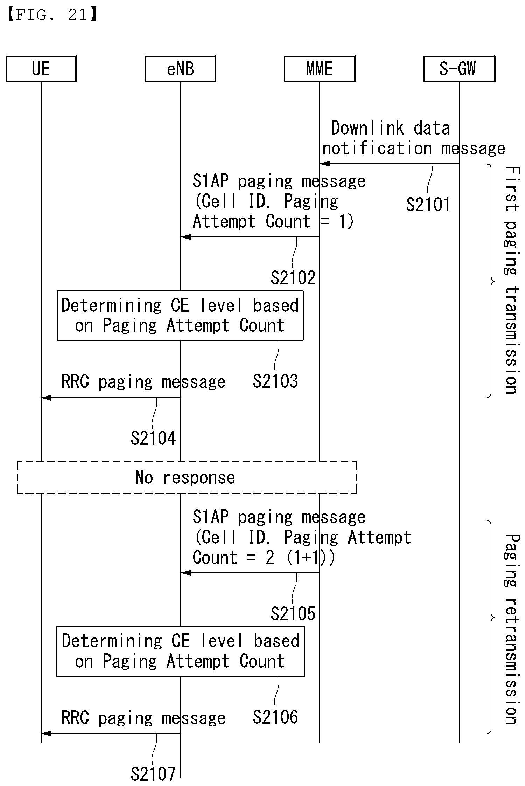

FIG. 21 is a diagram exemplifying a paging transmission method according to an embodiment of the present invention.

In FIG. 21, embodiment 2) described above will be exemplified in more detail.

Referring to FIG. 21, an S-GW transmits a downlink data notification message to an MME (step, S2101).

The MME transmits an S1AP paging message to an eNB which is belonged to a tracking area where a UE registered most recently (step, S2102).

Here, the S1AP paging message may include paging transmission count (or paging attempt count) and a cell ID (e.g., ECGI).

Since step S2102 is the first paging transmission, the paging transmission count (or paging attempt count) may indicate 1.

The eNB that receives the S1AP paging message determines a CE level of the corresponding UE based on the received paging transmission count (or paging attempt count) (step, S2103).

In case that total N CE levels are predefined (or preconfigured) since the paging transmission count (or paging attempt count) is 1, the eNB may determine a CE level of the corresponding UE to be one of medium value, an average value and the lowest value among N CE levels which are predefined (or preconfigured).

Or, the eNB may determine a CE level of the corresponding UE based on (considering) paging resources and/or a number of UE to which a RRC paging message is transmitted, and so on.

And the eNB transmits a RRC paging message (or paging information) to the corresponding UE by applying the CE level which is determined in step, S2103 (step, S2104).

Later, if there is no response to the paging from the corresponding UE for a predetermined time, the MME retransmits the S1AP paging message to the eNB (step, S2105).

Here, the S1AP paging message may include paging transmission count (or paging attempt count) and a cell ID (e.g., ECGI) of the corresponding UE.

Since step S2105 is the second paging transmission, the paging transmission count (or paging attempt count) may indicate 2.

The eNB that receives the S1AP paging message determines a CE level of the corresponding UE based on the received paging transmission count (or paging attempt count) (step, S2106).

Since the paging transmission count (or paging attempt count) is 2, the eNB may determine the corresponding CE level by ramping-up the previous CE level (i.e., the CE level determined in step, S2103) of the corresponding UE.

And the eNB transmits a RRC paging message (or paging information) to the corresponding UE by applying the CE level which is determined in step, S2106 (step, S2107).

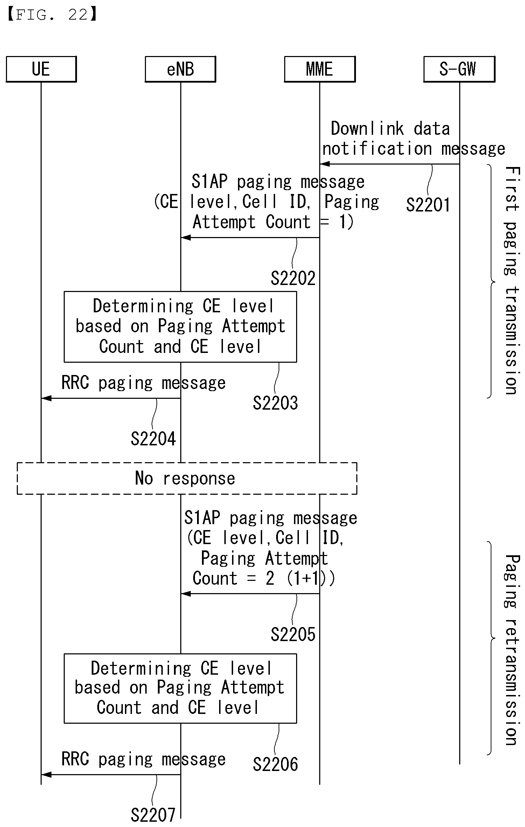

FIG. 22 is a diagram exemplifying a paging transmission method according to an embodiment of the present invention.

In FIG. 22, embodiment 3) described above will be exemplified in more detail.

Referring to FIG. 22, an S-GW transmits a downlink data notification message to an MME (step, S2201).

The MME transmits an S1AP paging message to an eNB which is belonged to a tracking area where a UE registered most recently (step, S2202).

Here, the S1AP paging message may include a CE level, paging transmission count (or paging attempt count) and a cell ID (e.g., ECGI) of the corresponding UE.

At the moment, in case that the MME receives a CE level which is received from the eNB during an S1 release procedure for the corresponding UE and store it in UE context information, the MME may transmit the S1AP paging message with the CE level being included.

On the other hand, in case that the eNB does not provide a CE level to the MME, the CE level may correspond to a value which is determined by the MME (e.g., in case that total N CE levels are predefined (or preconfigured), one of medium value, an average value, the lowest CE level value or the highest CE level value of N CE levels which are predefined (or preconfigured).

Since step S2202 is the first paging transmission, the paging transmission count (or paging attempt count) may indicate 1.

The eNB that receives the S1AP paging message determines a CE level of the corresponding UE based on the received CE level and the paging transmission count (or paging attempt count) (step, S2203).

Since the paging transmission count (or paging attempt count) is 1, the eNB may determine the CE level received from the MME as it is to be a CE level of the corresponding UE.

And the eNB transmits a RRC paging message (or paging information) to the corresponding UE by applying the CE level determined in step, S2203 (step, S2204).

Later, if there is no response to the paging from the corresponding UE for a predetermined time, the MME retransmits the S1AP paging message to the eNB (step, S2205).

Here, the S1AP paging message may include a CE level, paging transmission count (or paging attempt count) and a cell ID (e.g., ECGI) of the corresponding UE.

At the moment, the MME may transmit a CE level which is the same as a CE level in the first S1AP paging message (i.e., step S2202).

Since step S2205 is the second paging transmission, the paging transmission count (or paging attempt count) may indicate 2.

The eNB that receives the S1AP paging message determines a CE level of the corresponding UE based on the received CE level, the paging transmission count (or paging attempt count) (step, S2206).

Since the paging transmission count (or paging attempt count) is 2, the eNB may determine the corresponding CE level by ramping-up the CE level which is received from the MME.

And the eNB transmits a RRC paging message (or paging information) to the corresponding UE by applying the CE level which is determined in step, S2206 (step, S2207).

Meanwhile, as another example, in step S2205, the MME may transmit a CE level which is higher than that of in the first S1AP paging message. In this case, in step S2206, the eNB may determine the CE level as it is received from the MME to be a CE level of the corresponding UE, and in step S2207, transmit a RRC paging message by applying the CE level which is determined.

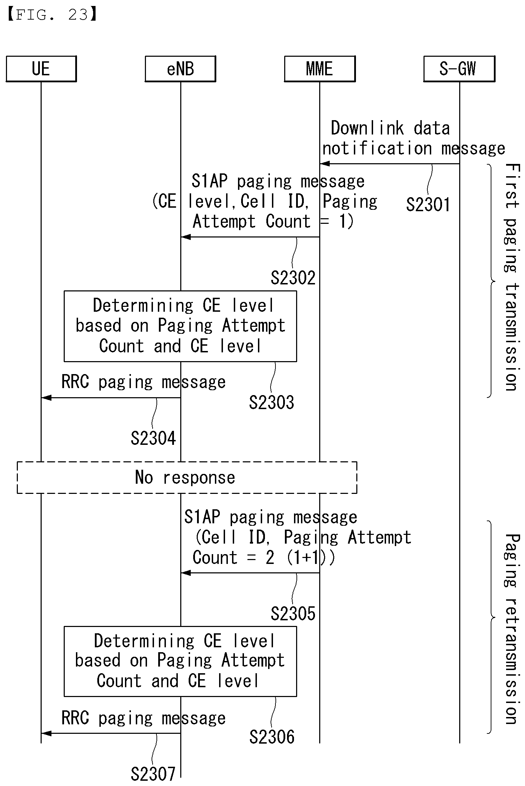

FIG. 23 is a diagram exemplifying a paging transmission method according to an embodiment of the present invention.

In FIG. 23, embodiment 4) described above will be exemplified in more detail.

Referring to FIG. 23, an S-GW transmits a downlink data notification message to an MME (step, S2301).

The MME transmits an S1AP paging message to an eNB which is belonged to a tracking area where a UE registered most recently (step, S2302).

Since step S2302 is the first paging transmission, the S1AP paging message may include a CE level, paging transmission count (or paging attempt count) and a cell ID (e.g., ECGI) of the corresponding UE. And the paging transmission count (or paging attempt count) may indicate 1.

At the moment, in case that the MME receives a CE level which is received from the eNB during an S1 release procedure for the corresponding UE and store it in UE context information, the MME may transmit the S1AP paging message with the CE level being included.

On the other hand, in case that the eNB does not provide a CE level to the MME, the CE level may correspond to a value which is determined by the MME (e.g., in case that total N CE levels are predefined (or preconfigured), one of medium value, an average value, the lowest CE level value or the highest CE level value of N CE levels which are predefined (or preconfigured).

The eNB that receives the S1AP paging message determines a CE level of the corresponding UE based on the received CE level and the paging transmission count (or paging attempt count) (step, S2303).

Since the paging transmission count (or paging attempt count) is 1, the eNB may determine the CE level received from the MME as it is to be a CE level of the corresponding UE.

And the eNB transmits a RRC paging message (or paging information) to the corresponding UE by applying the CE level determined in step, S2303 (step, S2304).

Later, if there is no response to the paging from the corresponding UE for a predetermined time, the MME retransmits the S1AP paging message to the eNB (step, S2305).

Here, since step S2305 is the second paging transmission, the S1AP paging message may include paging

**EP 3 244 671 A1**

transmission count (or paging attempt count) and a cell ID (e.g., ECGI) of the corresponding UE. And the paging transmission count (or paging attempt count) may indicate 2.

The eNB that receives the S1AP paging message determines a CE level of the corresponding UE based on the received CE level, the paging transmission count (or paging attempt count) (step, S2306).

Different from the example of FIG. 22 above, in the example of FIG. 23, a CE level is included in the first S1AP paging message, and the S1AP paging message which is retransmitted later does not include a CE level.

Accordingly, the eNB may determine a CE level of the corresponding UE based on the CE level received in the first S1AP paging message and the paging transmission count (or paging attempt count) in the S1AP paging message which is currently received.

Since the paging transmission count (or paging attempt count) is 2 in step S2305, the eNB may determine the corresponding CE level by ramping-up the CE level which is included in the first S1AP paging message.

And the eNB transmits a RRC paging message (or paging information) to the corresponding UE by applying the CE level which is determined in step, S2306 (step, S2207).

Meanwhile, although the CE level is mainly described in embodiments of FIG. 17 to FIG. 23 above, according to another embodiment, a CE level may be replaced by a paging power level and/or paging priority.

Here, the power level means a power level for transmitting a RRC paging message (or for transmitting a PDSCH that carries the RRC paging message).

And the paging priority means a reference for determining an order of each paging message being transmitted (i.e., for each UE) with respect to a plurality of paging messages which are available to be transmitted on a single paging occasion. As described above, since the maximum number of paging records that may be included in a single RRC paging message is predefined, a case that an eNB is unable to transmit paging on the corresponding paging occasion to all UEs which are paged. In this case, the eNB may determine a paging message which will be transmitted on the corresponding paging occasion by considering the paging priority.

In more detail, during the S1 release procedure according to FIG. 17 above, the eNB may deliver a paging power level and/or paging priority for the corresponding UE with a CE level or regardless of the CE level to the MME.

In addition, during the paging procedure according to FIG. 18 above, the MME may deliver a paging power level and/or paging priority for the corresponding UE instead of the CE level to the eNB.

In case that the eNB receives the paging power level and/or paging priority instead of the CE level from the MME, the eNB may determine a paging power level and/or paging priority for transmitting a RRC paging message for the corresponding UE by considering the received paging power level and/or paging priority. And the eNB may transmit the RRC paging message by applying the paging power level and/or paging priority which is determined.

In addition, in case that the eNB receives only the paging attempt count from the MME, the eNB may determine a power level and/or paging priority for transmitting a RRC paging message for the corresponding UE by using the received paging attempt count (or paging transmission count). And the eNB may transmit the RRC paging message by applying the determined power level and/or paging priority. As an example, the eNB may increase the power level and/or the paging priority for the corresponding UE as the paging attempt count increases.

As such, by transmitting the paging power level and/or the paging priority which are proper to the corresponding UE, a paging reception efficiency may be increased and unnecessary consumption of radio resources owing to paging retransmission may be prevented.

Overview of devices to which the present invention can be applied

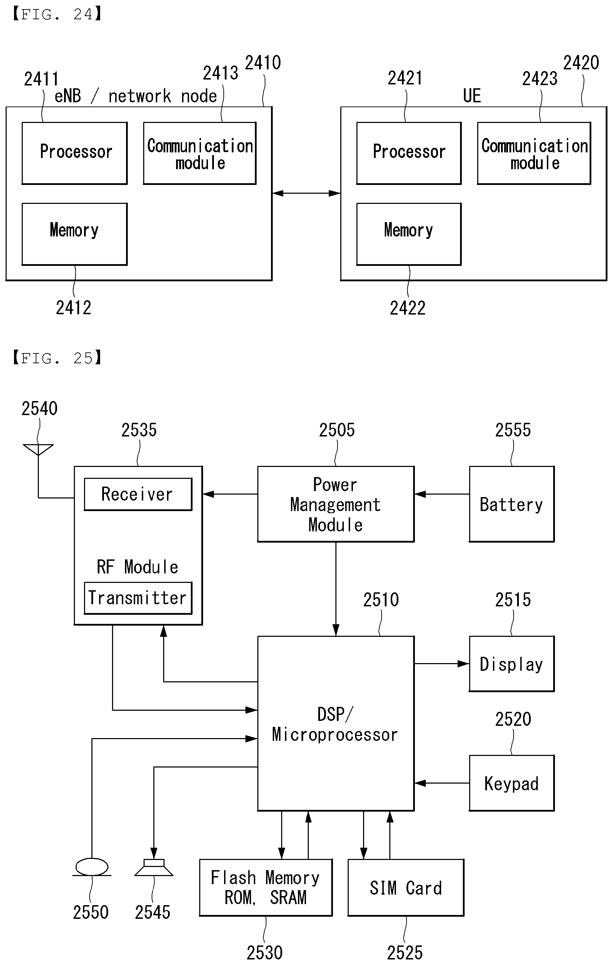

FIG. 24 illustrates a block diagram of a communication device according to one embodiment of the present invention.

With reference to FIG. 24, a wireless communication system comprises a network node 2410 and a plurality of UEs 2420.

A network node 2410 comprises a processor 2411, memory 2412, and communication module 2413. The processor 2411 implements proposed functions, processes and/or methods proposed through FIG. 1 to FIG. 23. The processor 2411 can implement layers of wired/wireless interface protocol. The memory 2412, being connected to the processor 2411, stores various types of information for driving the processor 2411. The communication module 2413, being connected to the processor 2411, transmits and/or receives wired/wireless signals. Examples of the network node 2410 include an eNB, MME, HSS, SGW, PGW, application server and so on. In particular, in case the network node 2410 is an eNB, the communication module 2413 can include an Radio Frequency (RF) unit for transmitting/receiving a radio signal.

The UE 2420 comprises a processor 2421, memory 2422, and communication module (or RF unit) 2423. The processor 2421 implements proposed functions, processes and/or methods proposed through FIG. 1 to FIG. 23. The processor 2421 can implement layers of wired/wireless interface protocol. The memory 2422, being connected to the processor 2421, stores various types of information for driving the processor 2421. The communication module 2423,

38

being connected to the processor 2421, transmits and/or receives wired/wireless signals.

The memory 2412, 2422 can be installed inside or outside the processor 2411, 2421 and can be connected to the processor 2411, 2421 through various well-known means. Also, the network node 2410 (in the case of an eNB) and/or the UE 2420 can have a single antenna or multiple antennas.

FIG. 25 illustrates a block diagram of a wireless communication apparatus according to an embodiment of the present invention.

Particularly, in Fig. 25, the UE described above Fig. 24 will be exemplified in more detail.

Referring to Fig. 25, the UE includes a processor (or digital signal processor) 2510, RF module (RF unit) 2535, power management module 2505, antenna 2540, battery 2555, display 2515, keypad 2520, memory 2530, Subscriber Identification Module (SIM) card 2525 (which may be optional), speaker 2545 and microphone 2550. The UE may include a single antenna or multiple antennas.

The processor 2510 may be configured to implement the functions, procedures and/or methods proposed by the present invention as described in FIG. 1-23. Layers of a wireless interface protocol may be implemented by the processor 2510.

The memory 2530 is connected to the processor 2510 and stores information related to operations of the processor 2510. The memory 2530 may be located inside or outside the processor 2510 and may be connected to the processors 2510 through various well-known means.

A user enters instructional information, such as a telephone number, for example, by pushing the buttons of a keypad 2520 or by voice activation using the microphone 2550. The microprocessor 2510 receives and processes the instructional information to perform the appropriate function, such as to dial the telephone number. Operational data may be retrieved from the SIM card 2525 or the memory module 2530 to perform the function. Furthermore, the processor 2510 may display the instructional and operational information on the display 2515 for the user's reference and convenience.

The RF module 2535 is connected to the processor 2510, transmits and/or receives an RF signal. The processor 2510 issues instructional information to the RF module 2535, to initiate communication, for example, transmits radio signals comprising voice communication data. The RF module 2535 comprises a receiver and a transmitter to receive and transmit radio signals. An antenna 2540 facilitates the transmission and reception of radio signals. Upon receiving radio signals, the RF module 2535 may forward and convert the signals to baseband frequency for processing by the processor 2510. The processed signals would be transformed into audible or readable information outputted via the speaker 2545.

The aforementioned embodiments are achieved by combination of structural elements and features of the present invention in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment. Moreover, it will be apparent that some claims referring to specific claims may be combined with another claims referring to the other claims other than the specific claims to constitute the embodiment or add new claims by means of amendment after the application is filed.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

[Industrial Applicability]

Although the method of paging transmission in the wireless communication system of the present invention is described mainly for the example applied to 3GPP LTE/LTE-A system, it is also possible to be applied to various wireless communication system as well as 3GPP LTE/LTE-A system.

**Claims**

1. A method for transmitting paging by a eNodeB (eNB) in a wireless communication system, comprising:

receiving a paging message including paging count and a coverage enhancement (CE) level value from a mobility management entity (MME); and

in case of receiving the paging message from the MME, transmitting paging information to a user equipment (UE) through a paging control channel (PCCH),
wherein the CE level value is a CE level received from a eNB to which the UE is lastly connected.

2. The method for transmitting paging of claim 1, wherein the paging message includes an E-UTRAN cell global identifier (ECGI) of a cell to which the CE level value is applied.

3. The method for transmitting paging of claim 1, wherein the CE level is transmitted through an S1 UE context release complete message to the MME during an S1 release procedure.

4. The method for transmitting paging of claim 1, wherein the CE level value included in the paging message is determined to be one of a lowest value, an average value, a medium value and a highest value among the total CE level values by the MME.

5. The method for transmitting paging of claim 1, wherein the CE level value included in the paging message is identical regardless of the paging count.

6. The method for transmitting paging of claim 5, wherein the CE level of the UE is determined by ramping-up the CE level value which is included in the paging message according to the paging count by the eNB.

7. The method for transmitting paging of claim 3,
if the paging count is 1, wherein the CE level value included in the paging message is the CE level which is transmitted through the S1 UE context release complete message, and
if the paging count is 2 or more, wherein the CE level value included in the paging message is a CE level value which is ramped-up according to the paging count.

8. The method for transmitting paging of claim 4,
if the paging count is 1, wherein the CE level value is one of a lowest value, an average value, a medium value and a highest value among the total CE level values which is determined by the MME, and
if the paging count is 2 or more, wherein the CE level value included in the paging message is a CE level value which is ramped-up according to the paging count.

9. The method for transmitting paging of claim 1, if the CE level value which is higher than a CE level that is available to be serviced by the eNB is received from the MME, a maximum CE level that is available to be serviced by the eNB is applied to transmitting the paging information.

10. The method for transmitting paging of claim 1,
if the paging count is 1, wherein the paging message includes the paging count and the CE level value, and
if the paging count is 2 or more, wherein the paging message includes the paging count and does not include the CE level.

11. A eNodeB (eNB) for transmitting paging in a wireless communication system, comprising:

a communication module for transmitting and receiving signals; and
a processor controlling the communication module,
wherein the processor is configured to perform:

receiving a paging message including paging count and a coverage enhancement (CE) level value from a mobility management entity (MME); and
in case of receiving the paging message from the MME, transmitting paging information to a user equipment (UE) through a paging control channel (PCCH),
wherein the CE level value is a CE level received from a eNB to which the UE is lastly connected.

【FIG. 1】

【FIG. 2】

【FIG. 3】

E-UTRAN

EPC

【FIG. 4】

(a) Control Plane Protocol Stack

(b) User Plane Protocol Stack

【FIG. 5】

eNB | MME

S1-AP ↔ S1-AP

SCTP ↔ SCTP

IP ↔ IP

L2(MAC) ↔ L2(MAC)

L1(PHY) ↔ L1(PHY)

S1-MME

(a) control-plane protocol stack

eNB | SGW

GTP-U ↔ GTP-U

UDP ↔ UDP

IP ↔ IP

L2(MAC) ↔ L2(MAC)

L1(PHY) ↔ L1(PHY)

S1-U

(b) user-plane protocol stack

【FIG. 6】

PDCCH

【FIG. 7】

【FIG. 8】

【FIG. 9】

【FIG. 10】

【FIG. 11】

【FIG. 12】

【FIG. 13】

【FIG. 14】

【FIG. 15】

【FIG. 16】

1601

1602

【FIG. 17】

S1701 S1-AP: UE Context Release Request

S1702 S1-AP: UE Context Release Command

S1703 RRC Connection Release

S1704 S1-AP: UE Context Release Complete (CE level, Cell ID)

【FIG. 18】

```
     eNB                                              MME
      ┌─┐                                            ┌─┐
      └─┘                                            └─┘
       │                                              │
       │                                   S1801      │
       │                                     │        │
       │                PAGING               │        │
       │◄─────────────────────────────────────────────│
       │  (CE level, Paging Attempt Count and/or Cell ID)
       │                                              │
       │                                              │
```

【FIG. 19】

```
                    ┌──────────┐
                    │  Start   │
                    └──────────┘
                          │
                          ▼
        ┌───────────────────────────────────┐
        │   Receiving S1AP paging message   │
        │      (CE level, Paging Attempt    │─── S1901
        │      Count and/or Cell ID)        │
        └───────────────────────────────────┘
                          │
                          ▼
        ┌───────────────────────────────────┐
        │   Determining CE level based  on  │─── S1902
        │  Paging Attempt Count(and CE level)│
        └───────────────────────────────────┘
                          │
                          ▼
        ┌───────────────────────────────────┐
        │      Transmitting RRC paging      │─── S1903
        │    message by applying CE level   │
        └───────────────────────────────────┘
                          │
                          ▼
                    ┌──────────┐
                    │   End    │
                    └──────────┘
```

【FIG. 20】

【FIG. 21】

【FIG. 22】

【FIG. 23】

UE      eNB      MME      S-GW

Downlink data
notification message

S1AP paging message
(CE level, Cell ID, Paging
Attempt Count = 1)

S2301

S2302

Determining CE level
based on Paging Attempt
Count and CE level

RRC paging message

S2303

S2304

First paging transmission

No response

S1AP paging message
(Cell ID, Paging Attempt
Count = 2 (1+1))

S2305

Determining CE level
based on Paging Attempt
Count and CE level

RRC paging message

S2306

S2307

Paging retransmission

【FIG. 24】

eNB / network node

2411 | Processor

2413 | Communication module

2410

2412 | Memory

UE

2421 | Processor

2423 | Communication module

2420

2422 | Memory

【FIG. 25】

2540

2535 | RF Module
Receiver
Transmitter

2505 | Power Management Module

2555 | Battery

2510 | DSP/ Microprocessor

2515 | Display

2520 | Keypad

2550

2545

2530 | Flash Memory ROM, SRAM

2525 | SIM Card

## INTERNATIONAL SEARCH REPORT

| International application No. |
| --- |
| **PCT/KR2016/000206** |

| A. CLASSIFICATION OF SUBJECT MATTER |
| --- |
| *H04W 68/02(2009.01)i, H04W 88/08(2009.01)i* |
| According to International Patent Classification (IPC) or to both national classification and IPC |

| B. FIELDS SEARCHED |
| --- |
| Minimum documentation searched (classification system followed by classification symbols) |
| H04W 68/02; H04W 74/08; H04B 7/26; H04W 68/00; H04W 4/10; H04W 76/06; H04W 36/08; H04W 72/00; H04W 48/10; H04W 88/08 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: MME, coverage enhancement level, paging count, and PCCH |

C. DOCUMENTS CONSIDERED TO BE RELEVANT

| Category* | Citation of document, with indication, where appropriate, of the relevant passages | Relevant to claim No. |
| --- | --- | --- |
| A | US 2014-0098761 A1 (INTERDIGITAL PATENT HOLDINGS, INC.) 10 April 2014<br>See paragraphs [0048]-[0067], [0268]-[0270]; and claims 1-8. | 1-11 |
| A | US 2010-0178941 A1 (CHUN, Sung - Duck et al.) 15 July 2010<br>See paragraphs [0012]-[0013]; and claims 1-15. | 1-11 |
| A | WO 2014-204285 A1 (LG ELECTRONICS INC.) 24 December 2014<br>See paragraphs [0055]-[0056]; and claims 1-10. | 1-11 |
| A | CN 102111722 A (POTEVIO INSTITUTE OF TECHNOLOGY CO., LTD.) 29 June 2011<br>See paragraphs [0027]-[0037]; claims 1-9; and figure 1. | 1-11 |
| A | CN 102143553 A (POTEVIO INSTITUTE OF TECHNOLOGY CO., LTD.) 03 August 201<br>See paragraphs [0055]-[0094]; claims 1-5; and figure 3. | 1-11 |

| ☐ Further documents are listed in the continuation of Box C. | ☒ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 APRIL 2016 (24.04.2016) | **25 APRIL 2016 (25.04.2016)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (January 2015)

INTERNATIONAL SEARCH REPORT
Information on patent family members

International application No.

**PCT/KR2016/000206**

| Patent document cited in search report | Publication date | Patent family member | Publication date |
|---|---|---|---|
| US 2014-0098761 A1 | 10/04/2014 | CN 104704884 A | 10/06/2015 |
| | | EP 2904850 A1 | 12/08/2015 |
| | | JP 2015-537422 A | 24/12/2015 |
| | | KR 10-2015-0064196 A | 10/06/2015 |
| | | TW 201429174 A | 16/07/2014 |
| | | WO 2014-055878 A1 | 10/04/2014 |
| US 2010-0178941 A1 | 15/07/2010 | AU 2006-282195 A1 | 01/03/2007 |
| | | AU 2006-282195 B2 | 10/12/2009 |
| | | AU 2007-203852 A1 | 12/07/2007 |
| | | AU 2007-203852 | 26/08/2010 |
| | | AU 2007-203861 A1 | 12/07/2007 |
| | | AU 2007-203861 B2 | 26/11/2009 |
| | | AU 2007-212916 A1 | 16/08/2007 |
| | | AU 2007-212916 B2 | 11/03/2010 |
| | | AU 2007-212923 A1 | 16/08/2007 |
| | | AU 2007-212923 B2 | 21/01/2010 |
| | | AU 2007-288600 A1 | 28/02/2008 |
| | | AU 2007-288600 B2 | 16/09/2010 |
| | | AU 2007-314859 A1 | 08/05/2008 |
| | | AU 2007-314859 B2 | 18/11/2010 |
| | | AU 2009-209739 A1 | 06/08/2009 |
| | | AU 2009-209739 B2 | 02/06/2011 |
| | | AU 2009-224137 A1 | 17/09/2009 |
| | | AU 2009-261045 A1 | 23/12/2009 |
| | | AU 2009-329561 A1 | 27/08/2009 |
| | | AU 2009-329562 A1 | 27/08/2009 |
| | | AU 2010-203154 A1 | 08/07/2010 |
| | | CA 02664586 A1 | 08/05/2008 |
| | | CA 02692649 A1 | 06/08/2009 |
| | | CA 02715075 A1 | 27/08/2009 |
| | | CA 02715099 A1 | 27/08/2009 |
| | | CA 02715986 A1 | 24/09/2009 |
| | | CA 02717368 A1 | 17/09/2009 |
| | | CA 02722058 A1 | 07/01/2010 |
| | | CA 02722781 A1 | 23/12/2009 |
| | | CA 02724595 A1 | 23/12/2009 |
| | | CA 02725771 A1 | 23/12/2009 |
| | | CA 02748799 A1 | 08/07/2010 |
| | | CA 2664586 C | 28/05/2013 |
| | | CA 2692649 C | 07/07/2015 |
| | | CA 2715075 C | 21/04/2015 |
| | | CA 2715099 C | 04/08/2015 |
| | | CA 2715986 C | 21/01/2014 |
| | | CA 2717368 C | 19/08/2014 |
| | | CA 2722058 C | 21/01/2014 |
| | | CA 2722781 C | 04/02/2014 |
| | | CA 2724595 C | 04/02/2014 |
| | | CA 2748799 C | 15/04/2014 |

Form PCT/ISA/210 (patent family annex) (January 2015)

INTERNATIONAL SEARCH REPORT
Information on patent family members

International application No.

**PCT/KR2016/000206**

| Patent document cited in search report | Publication date | Patent family member | Publication date |
|---|---|---|---|
| | | CN 101248699 A | 20/08/2008 |
| | | CN 101248699 B | 03/10/2012 |
| | | CN 101300755 A | 05/11/2008 |
| | | CN 101300755 B | 02/01/2013 |
| | | CN 101300756 A | 05/11/2008 |
| | | CN 101361299 A | 04/02/2009 |
| | | CN 101361299 B | 18/07/2012 |
| | | CN 101361300 A | 04/02/2009 |
| | | CN 101361300 B | 30/01/2013 |
| | | CN 101361309 A | 04/02/2009 |
| | | CN 101361309 B | 27/06/2012 |
| | | CN 101366204 A | 11/02/2009 |
| | | CN 101366204 B | 17/07/2013 |
| | | CN 101366206 A | 11/02/2009 |
| | | CN 101366206 B | 20/06/2012 |
| | | CN 101366207 A | 11/02/2009 |
| | | CN 101366207 B | 23/05/2012 |
| | | CN 101379723 A | 04/03/2009 |
| | | CN 101379723 B | 10/10/2012 |
| | | CN 101379730 A | 04/03/2009 |
| | | CN 101379730 B | 20/06/2012 |
| | | CN 101379731 A | 04/03/2009 |
| | | CN 101379731 B | 22/05/2013 |
| | | CN 101379732 A | 04/03/2009 |
| | | CN 101379732 B | 05/09/2012 |
| | | CN 101379733 A | 04/03/2009 |
| | | CN 101379734 A | 04/03/2009 |
| | | CN 101379734 B | 30/01/2013 |
| | | CN 101405987 A | 08/04/2009 |
| | | CN 101405987 B | 28/09/2011 |
| | | CN 101406024 A | 08/04/2009 |
| | | CN 101433008 A | 13/05/2009 |
| | | CN 101433008 B | 30/09/2015 |
| | | CN 101473565 A | 01/07/2009 |
| | | CN 101473565 B | 07/11/2012 |
| | | CN 101473567 A | 01/07/2009 |
| | | CN 101529748 A | 09/09/2009 |
| | | CN 101529748 B | 27/03/2013 |
| | | CN 101536578 A | 16/09/2009 |
| | | CN 101536578 B | 28/08/2013 |
| | | CN 101554082 A | 07/10/2009 |
| | | CN 101554082 B | 17/08/2011 |
| | | CN 101569148 A | 28/10/2009 |
| | | CN 101569148 B | 11/07/2012 |
| | | CN 101578783 A | 11/11/2009 |
| | | CN 101589566 A | 25/11/2009 |
| | | CN 101589566 B | 12/06/2013 |
| | | CN 101601208 A | 09/12/2009 |
| | | CN 101601208 B | 16/04/2014 |
| | | CN 101601225 A | 09/12/2009 |

Form PCT/ISA/210 (patent family annex) (January 2015)

INTERNATIONAL SEARCH REPORT
Information on patent family members

| International application No. |
| --- |
| **PCT/KR2016/000206** |

| Patent document cited in search report | Publication date | Patent family member | Publication date |
| --- | --- | --- | --- |
| | | CN 101601225 B | 20/06/2012 |
| | | CN 101621832 A | 06/01/2010 |
| | | CN 101621832 B | 09/01/2013 |
| | | CN 101675610 A | 17/03/2010 |
| | | CN 101675610 B | 29/08/2012 |
| | | CN 101675611 A | 17/03/2010 |
| | | CN 101675611 B | 17/10/2012 |
| | | CN 101675618 A | 17/03/2010 |
| | | CN 101675618 B | 25/11/2015 |
| | | CN 101682418 A | 24/03/2010 |
| | | CN 101682418 B | 31/07/2013 |
| | | CN 101682557 A | 24/03/2010 |
| | | CN 101682558 A | 24/03/2010 |
| | | CN 101682558 B | 17/07/2013 |
| | | CN 101682591 A | 24/03/2010 |
| | | CN 101682591 B | 26/09/2012 |
| | | CN 101682916 A | 24/03/2010 |
| | | CN 101682926 A | 24/03/2010 |
| | | CN 101682926 B | 18/09/2013 |
| | | CN 101689924 A | 31/03/2010 |
| | | CN 101689924 B | 03/04/2013 |
| | | CN 101690361 A | 31/03/2010 |
| | | CN 101690361 B | 04/07/2012 |
| | | CN 101690374 A | 31/03/2010 |
| | | CN 101690374 B | 26/12/2012 |
| | | CN 101690375 A | 31/03/2010 |
| | | CN 101690375 B | 19/09/2012 |
| | | CN 101779389 A | 14/07/2010 |
| | | CN 101779389 B | 27/03/2013 |
| | | CN 101779408 A | 14/07/2010 |
| | | CN 101785218 A | 21/07/2010 |
| | | CN 101785218 B | 07/10/2015 |
| | | CN 101803237 A | 11/08/2010 |
| | | CN 101803237 B | 10/07/2013 |
| | | CN 101803245 A | 11/08/2010 |
| | | CN 101803245 B | 17/07/2013 |
| | | CN 101803333 A | 11/08/2010 |
| | | CN 101803333 B | 15/05/2013 |
| | | CN 101809948 A | 18/08/2010 |
| | | CN 101828344 A | 08/09/2010 |
| | | CN 101828344 B | 05/12/2012 |
| | | CN 101836374 A | 15/09/2010 |
| | | CN 101836374 B | 03/10/2012 |
| | | CN 101868932 A | 20/10/2010 |
| | | CN 101933280 A | 29/12/2010 |
| | | CN 101933281 A | 29/12/2010 |
| | | CN 101933281 B | 12/06/2013 |
| | | CN 101933364 A | 29/12/2010 |
| | | CN 101933364 B | 07/05/2014 |
| | | CN 101946446 A | 12/01/2011 |

Form PCT/ISA/210 (patent family annex) (January 2015)

INTERNATIONAL SEARCH REPORT
Information on patent family members

International application No.

**PCT/KR2016/000206**

| Patent document cited in search report | Publication date | Patent family member | Publication date |
|---|---|---|---|
| | | CN 101946446 B | 26/06/2013 |
| | | CN 101953095 A | 19/01/2011 |
| | | CN 101953095 B | 05/06/2013 |
| | | CN 101953096 A | 19/01/2011 |
| | | CN 101953096 B | 27/02/2013 |
| | | CN 101971548 A | 09/02/2011 |
| | | CN 101971548 B | 04/09/2013 |
| | | CN 101978620 A | 16/02/2011 |
| | | CN 101978637 A | 16/02/2011 |
| | | CN 101978637 B | 04/09/2013 |
| | | CN 101978743 A | 16/02/2011 |
| | | CN 101978743 B | 02/10/2013 |
| | | CN 101999219 A | 30/03/2011 |
| | | CN 101999219 B | 19/02/2014 |
| | | CN 102067479 A | 18/05/2011 |
| | | CN 102067479 B | 18/06/2014 |
| | | CN 102067480 A | 18/05/2011 |
| | | CN 102067481 A | 18/05/2011 |
| | | CN 102067481 B | 28/05/2014 |
| | | CN 102067704 A | 18/05/2011 |
| | | CN 102067704 B | 06/08/2014 |
| | | CN 102067705 A | 18/05/2011 |
| | | CN 102106181 A | 22/06/2011 |
| | | CN 102106181 B | 24/09/2014 |
| | | CN 102197669 A | 21/09/2011 |
| | | CN 102197669 B | 29/01/2014 |
| | | CN 102265700 A | 30/11/2011 |
| | | CN 102265700 B | 11/03/2015 |
| | | CN 102333521 A | 25/01/2012 |
| | | CN 102333521 B | 28/05/2014 |
| | | CN 102342167 A | 01/02/2012 |
| | | CN 102342167 B | 06/08/2014 |
| | | CN 102349327 A | 08/02/2012 |
| | | CN 102349327 B | 12/02/2014 |
| | | CN 102355343 A | 15/02/2012 |
| | | CN 102355343 B | 17/06/2015 |
| | | CN 102625463 A | 01/08/2012 |
| | | CN 102625463 B | 08/04/2015 |
| | | CN 102647264 A | 22/08/2012 |
| | | CN 102647264 B | 01/07/2015 |
| | | CN 102685919 A | 19/09/2012 |
| | | CN 102685919 B | 18/11/2015 |
| | | CN 102946633 A | 27/02/2013 |
| | | CN 102984694 A | 20/03/2013 |
| | | CN 103037438 A | 10/04/2013 |
| | | CN 103179614 A | 26/06/2013 |
| | | CN 103260226 A | 21/08/2013 |
| | | CN 103327536 A | 25/09/2013 |
| | | CN 103501519 A | 08/01/2014 |
| | | CN 103795511 A | 14/05/2014 |

Form PCT/ISA/210 (patent family annex) (January 2015)

INTERNATIONAL SEARCH REPORT
Information on patent family members

International application No.

**PCT/KR2016/000206**

| Patent document cited in search report | Publication date | Patent family member | Publication date |
|---|---|---|---|
| | | CN 103957577 A | 30/07/2014 |
| | | CN 103957578 A | 30/07/2014 |
| | | CN 103987106 A | 13/08/2014 |
| | | CN 104038325 A | 10/09/2014 |
| | | CN 104065409 A | 24/09/2014 |
| | | CN 104168663 A | 26/11/2014 |
| WO 2014-204285 A1 | 24/12/2014 | NONE | |
| CN102111722 A | 29/06/2011 | CN 102111722 B | 24/07/2013 |
| CN102143553 A | 03/08/2011 | CN 102143553 B | 18/09/2013 |

Form PCT/ISA/210 (patent family annex) (January 2015)